# EUROPÄISCHE PATENTSCHRIFT

(11) **EP 1 559 162 B1**
(45) Veröffentlichungstag und Bekanntmachung des Hinweises auf die Patenterteilung: **26.06.2013**
(21) Anmeldenummer: 03756472.1
(22) Anmeldetag: 02.10.2003
(51) Int. Cl.: H01M 8/10, B01D 67/00, C08J 5/22

(54) **MIT EINER KATALYSATORSCHICHT BESCHICHTETE PROTONENLEITENDE POLYMERMEMBRAN ENTHALTEND POLYAZOLE UND DEREN ANWENDUNG IN BRENNSTOFFZELLEN**
PROTON-CONDUCTING POLYMER MEMBRANE THAT CONTAINS POLYAZOLES AND IS COATED WITH A CATALYST LAYER, AND APPLICATION THEREOF IN FUEL CELLS
MEMBRANE POLYMERE CONDUCTRICE DE PROTONS RECOUVERTE D'UNE COUCHE CATALYTIQUE ET CONTENANT DES POLYAZOLES, ET SON UTILISATION DANS DES PILES A COMBUSTIBLE

(30) Priorität: 04.10.2002 DE 10246372
(43) Veröffentlichungstag der Anmeldung: 03.08.2005
(73) Patentinhaber: BASF Fuel Cell Research GmbH, 67056 Ludwigshafen (DE)
(72) Erfinder: BAURMEISTER, Jochen, 65817 Eppstein (DE); KUNDLER, Isabel, 61462 Königstein (DE); PADBERG, Christoph, 65193 Wiesbaden (DE); UENSAL, Oemer, 55128 Mainz (DE); KIEFER, Joachim, 66679 Losheim am See (DE); CALUNDANN, Gordon, Somerset, NJ 08873 (US); BENICEWICZ, Brian, Loudonville, NY 1221 (US); WEBER, Mathias, 65428 Rüsselsheim (DE)
(74) Vertreter: Mai, Dörr, Besier
(86) Internationale Anmeldenummer: PCT/EP2003/010903
(87) Internationale Veröffentlichungsnummer: WO 2004/034498

(56) Entgegenhaltungen:
- WO-A-02/38650
- WO-A-02/081547
- WO-A-02/088219
- WO-A-03/007411
- WO-A-03/022412
- WO-A1-92/15121

## Beschreibung

Die vorliegende Erfindung betrifft eine mit einer Katalysatorschicht beschichtete protonenleitende Polymerelektrolytmembran umfassend Polyazolblends, die aufgrund ihrer hervorragenden chemischen und thermischen Eigenschaften vielfältig eingesetzt werden kann und sich insbesondere als Polymer-Elektrolyt-Membran (PEM) in sogenannten PEM-Brennstoffzellen eignet.

Eine Brennstoffzelle enthält üblicherweise einen Elektrolyten und zwei durch den Elektrolyten getrennte Elektroden. Im Fall einer Brennstoffzelle wird einer der beiden Elektroden ein Brennstoff, wie Wasserstoffgas oder ein Methanol-Wasser-Gemisch, und der anderen Elektrode ein Oxidationsmittel, wie Sauerstoffgas oder Luft, zugeführt und dadurch chemische Energie aus der Brennstoffoxidation direkt in elektrische Energie umgewandelt. Bei der Oxidationsreaktion werden Protonen und Elektronen gebildet.

Der Elektrolyt ist für Wasserstoffionen, d.h. Protonen, aber nicht für reaktive Brennstoffe wie das Wasserstoffgas oder Methanol und das Sauerstoffgas durchlässig.

Eine Brennstoffzelle weist in der Regel mehrere Einzelzellen sogenannte MEE's (Membran-Elektroden-Einheit) auf, die jeweils einen Elektrolyten und zwei durch den Elektrolyten getrennte Elektroden enthalten.

Als Elektrolyt für die Brennstoffzelle kommen Feststoffe wie Polymerelektrolytmembranen oder Flüssigkeiten wie Phosphorsäure zur Anwendung. In jüngster Zeit haben Polymerelektrolytmembranen als Elektrolyte für Brennstoffzellen Aufmerksamkeit erregt.

Beispielsweise sind Polymerelektrolytmembranen mit Komplexen aus basischen Polymeren und starken Säuren entwickelt worden. So beschreibt WO96/13872 und die korrespondierende US-PS 5,525,436 ein Verfahren zur Herstellung einer protonenleitenden Polymerelektrolytmembranen, bei dem ein basisches Polymer, wie Polybenzimidazol, mit einer starken Säure, wie Phosphorsäure, Schwefelsäure usw., behandelt wird.

In J. Electrochem. Soc., Band 142, Nr. 7, 1995, S. L121-L123 wird die Dotierung eines Polybenzimidazols in Phosphorsäure beschrieben.

Aus EP-A-1354907 sind protonenleitende Membranen auf Basis von Polyazolen, die einen kovalent gebunden Sulfonsäure- bzw. Phosphonsäure-Rest tragen, bekannt. Hierzu wird beispielsweise eine Tetraamino-Verbindung (3,3',4;4'-Tetraaminodiphenylsulfon) mit einer Dicarbonsäure, die einen kovalent gebunden SulfonsäureRest trägt (2,5-Dicarboxybenzol-Sulfonsäure in Form des Natrium-Salzes), in Polyphosphorsäure umgesetzt.

Bei den im Stand der Technik bekannten basischen Polymermembranen wird die - zum Erzielen der erforderlichen Protonenleitfähigkeit - eingesetzte Mineralsäure (meist konzentrierte Phosphorsäure) üblicherweise nach der Formgebung der Polyazolfolie beigefügt. Das Polymer dient dabei als Träger für den Elektrolyten bestehend aus der hochkonzentrierten Phosphorsäure. Die Polymermembran erfüllt dabei weitere wesentliche Funktionen insbesondere muss sie eine hohe mechanische Stabilität aufweisen und als Separator für die beiden eingangs genannten Brennstoffe dienen.

Wesentliche Vorteile einer solchen Phosphorsäure dotierten Membran ist die Tatsache, dass eine Brennstoffzelle, bei der eine derartige Polymerelektrolytmembran eingesetzt wird, bei Temperaturen oberhalb 100°C ohne eine sonst notwendige Befeuchtung der Brennstoffe betrieben werden kann. Dies liegt in der Eigenschaft der Phosphorsäure begründet die Protonen ohne zusätzliches Wasser mittels des sog. Grotthus Mechanismus transportieren zu können (K.-D. Kreuer, Chem. Mater. 1996, 8, 610-641).

Durch die Möglichkeit des Betriebes bei Temperaturen oberhalb 100°C ergeben sich weitere Vorteile für das Brennstoffzellensystem. Zum Einen wird die Empfindlichkeit des Pt-Katalysators gegenüber Gasverunreinigungen, insbesondere CO, stark verringert. CO entsteht als Nebenprodukt bei der Reformierung des wasserstoffreichen Gases aus Kohlenstoffhaltigen Verbindungen, wie z.B. Erdgas, Methanol oder Benzin oder auch als Zwischenprodukt bei der direkten Oxidation von Methanol. Typischerweise muss der CO-Gehalt des Brennstoffes bei Temperaturen <100°C kleiner als 100 ppm sein. Bei Temperaturen im Bereich 150-200° können jedoch auch 10000 ppm CO oder mehr toleriert werden (N. J. Bjerrum et. al. Journal of Applied Electrochemistry, 2001,31, 773-779). Dies führt zu wesentlichen Vereinfachungen des vorgeschalteten Reformierungsprozesses und somit zu Kostensenkungen des gesamten Brennstoffzellensystems.

Die Leistung einer Membran-Elektroden-Einheit hergestellt mit solchen Membranen ist in WO 01/18894 A2. In einer 5 cm² Zelle wird bei einem Gasfluß von 160 ml/min und einem Überdruck von 1 atm für reinen Wasserstoff und bei einem Gasfluß von 200 ml/min und einem Überdruck von 1 atm für reinen Sauerstoff. Die Verwendung von reinem Sauerstoff, einem solch hohen Überdruck und solch hohen Stochiometrien ist jedoch technisch uninteressant.

Die Leistungen mit solchen Phosphorsäure dotierten Polyazolmembranen unter Verwendungen von reinem Wasserstoff und reinem Sauerstoff sind ebenfalls in Electrochimica Acta, Band 41, 1996, 193-197 beschrieben. Mit einer Platinbeladung von 0,5 mg/cm² an der Anode und 2 mg/cm² an der Kathode wird bei Verwendung von befeuchteten Brenngasen mit reinem Wasserstoff und reinem Sauerstoff und einem Überdruck von 1 atm für jedes Brenngas eine Stromdichte von kleiner als 0,2 A/cm² bei einer Spannung von 0,6 V erzielt. Bei Verwendung von Luft anstelle Sauerstoff sinkt dieser Wert auf kleiner als 0,1 A/cm².

Ein großer Vorteil von Brennstoffzellen ist die Tatsache, dass bei der elektrochemischen Reaktion die Energie des Brennstoffes direkt in elektrische Energie und Wärme umgewandelt wird. Als Reaktionsprodukt entsteht dabei an der Kathode Wasser. Als Nebenprodukt bei der elektrochemischen Reaktion entsteht also Wärme. Für Anwendungen bei denen nur der Strom zum Antrieb von Elektromotoren genutzt wird, wie z.B. für Automobilanwendungen, oder als vielfältiger Ersatz von Batteriesystemen muss ein Teil der bei der Reaktion entstehenden Wärme abgeführt werden, um ein Überhitzen des Systems zu vermeiden. Für die Kühlung werden dann zusätzliche, Energie verbrauchende Geräte notwendig, die den elektrischen Gesamt-Wirkungsgrad der Brennstoffzelle weiter verringern. Für stationäre Anwendungen wie zur zentralen oder dezentralen Erzeugung von Strom und Wärme lässt sich die Wärme effizient durch vorhandene Technologien wie z.B. Wärmetauscher nutzen. Zur Steigerung der Effizienz werden dabei hohe Temperaturen angestrebt. Liegt die Betriebstemperatur oberhalb 100°C und ist die Temperaturdifferenz zwischen der Umgebungstemperatur und der Betriebstemperatur groß, so wird es möglich das Brennstoffzellensystem effizienter zu kühlen beziehungsweise kleine Kühlflächen zu verwenden und auf zusätzliche Geräte zu verzichten im Vergleich zu Brennstoffzellen, die aufgrund der Membranbefeuchtung bei unter 100°C betrieben werden müssen.

Neben diesen Vorteilen weist ein solches Brennstoffzellensystem jedoch auch Nachteile auf. So ist die Haltbarkeit von Phosphorsäure dotierten Membranen relativ begrenzt. Hierbei wird die Lebensdauer insbesondere durch einen Betrieb der Brennstoffzelle unterhalb von 100°C, beispielsweise bei 80°C deutlich herabgesetzt. In diesem Zusammenhang ist jedoch festzuhalten, dass beim An- und Herunterfahren der Brennstoffzelle die Zelle bei diesen Temperaturen betrieben werden muss.

Des weiteren ist die Herstellung von Phosphorsäure dotierten Membranen relativ teuer, da üblich zunächst ein Polymer gebildet wird, welches anschließend mit Hilfe eines Lösungsmittels zu einer Folie gegossen wird. Nach der Trocknung der Folie wird diese in einem letzten Schritt mit einer Säure dotiert. So haben die bislang bekannten Polymermembranen einen hohen Gehalt an Dimethylacetamid (DMAc), der mittels bekannter Trocknungsmethoden nicht vollständig entfernt werden kann.

Darüber hinaus ist die Leistungsfähigkeit, beispielsweise die Leitfähigkeit von bekannten Membranen noch zu verbessern.

Weiterhin ist die Haltbarkeit von bekannten Hochtemperaturmembranen mit hoher Leitfähigkeit noch zu verbessern.

Darüber hinaus wird eine sehr große Menge an katalytisch aktiven Substanzen eingesetzt, um zu einer Membran-Elektroden-Einheit zu gelangen.

Der vorliegenden Erfindung liegt daher die Aufgabe zugrunde, eine neuartige Polymerelektrolytmembran bereitzustellen, die die zuvor dargelegten Aufgaben löst. Insbesondere soll eine erfindungsgemäße Membran kostengünstig und einfach hergestellt werden können.

Darüber hinaus war es mithin Aufgabe der vorliegenden Erfindung Polymerelektrolytmembranen zu schaffen, die eine hohe Leistungsfähigkeit, insbesondere eine hohe Leitfähigkeit über einen weiten Temperaturbereich zeigen. Hierbei sollte die Leitfähigkeit, insbesondere bei hohen Temperaturen ohne eine zusätzliche Befeuchtung erzielt werden. Hierbei soll die Membran geeignet sein, zu eine Membran-Elektroden-Einheit weiterverarbeitet zu werden, die besonders hohe Leistungsdichten liefern kann. Darüber hinaus sollte eine über die erfindungsgemäße Membran erhältliche Membran-Elektroden-Einheit eine besonders hohe Haltbarkeit, insbesondere eine lange Lebensdauer bei hohen Leistungsdichten aufweisen.

Des weiteren war es mithin Aufgabe der vorliegenden Erfindung eine Membran zur Verfügung zu stellen, die zu einer Membran-Elektroden-Einheit überführt werden kann, die eine hohe Leistungsfähigkeit auch bei einem sehr geringen Gehalt an katalytisch aktiven Substanzen, wie beispielsweise Platin, Ruthenium oder Palladium aufweist.

Eine weitere Aufgabe der Erfindung bestand darin eine Membran zur Verfügung zu stellen, die zu einer Membran-Elektroden-Einheit verpresst werden kann und die Brennstoffzelle mit geringen Stöchiometrien, bei geringem Gasfluß und/oder bei geringem Überdruck bei hoher Leistungsdichte betrieben werden kann.

Des weiteren soll die Betriebstemperatur von <80°C bis auf 200°C ausgeweitet werden können, ohne dass die Lebensdauer der Brennstoffzelle sehr stark herabgesetzt werden würde.

Gelöst werden diese Aufgaben durch eine mit einer Katalysatorschicht beschichtete protonenleitende Polymermembran umfassend Polyazole mit allen Merkmalen des Anspruchs 1.

Eine erfindungsgemäße Membran zeigt über einen großen Temperaturbereich eine hohe Leitfähigkeit, die auch ohne eine zusätzliche Befeuchtung erzielt wird.
Des weiteren kann eine erfindungsgemäße Membran einfach und kostengünstig hergestellt werden. So kann insbesondere auf große Mengen an teuren Lösungsmitteln, wie Dimethylacetamid verzichtet werden.
Des weiteren zeigen diese Membranen eine überraschend lange Lebensdauer. Des weiteren kann eine Brennstoffzelle, die mit einer erfindungsgemäßen Membran ausgestattet ist, auch bei tiefen Temperaturen, beispielsweise bei 80°C betrieben werden, ohne dass hierdurch die Lebensdauer der Brennstoffzelle sehr stark herabgesetzt wird.

Darüber hinaus kann die Membran zu eine Membran-Elektroden-Einheit weiterverarbeitet werden, die besonders hohe Stromstärken liefern kann. Eine so erhaltene Membran-Elektroden-Einheit weist eine besonders hohe Haltbarkeit, insbesondere eine lange Lebensdauer bei hohen Stromstärken auf.

Des weiteren kann die Membran der vorliegenden Erfindung zu einer Membran-Elektroden-Einheit überführt werden, die eine hohe Leistungsfähigkeit auch bei einem sehr geringen Gehalt an katalytisch aktiven Substanzen, wie beispielsweise Platin, Ruthenium oder Palladium, aufweist.

Gegenstand der vorliegenden Erfindung ist eine mit einer Katalysatorschicht beschichtete protonenleitende Polymermembran enthaltend Polyazole erhältlich durch ein Verfahren umfassend die Schritte
A) Herstellung einer Mischung umfassend
   Polyphosphorsäure,
   mindestens ein Polyazol (Polymer A) und/oder mindestens ein oder mehrere Verbindungen, die unter Einwirkung von Wärme gemäß Schritt B) zur Bildung von Polyazolen geeignet sind,
B) Erwärmen der Mischung erhältlich gemäß Schritt A) unter Inertgas auf Temperaturen von bis zu 400°C,
C) Aufbringen einer Schicht unter Verwendung der Mischung gemäß Schritt A) und/oder B) auf einem Träger,
D) Behandlung der in Schritt C) gebildeten Membran in Gegenwart von Feuchtigkeit sodass ein partielle Hydrolyse der anwesenden Polyphosphorsäure erfolgt bis diese selbsttragend ist,
E) Aufbringen mindestens einer Katalysatorschicht auf die in Schritt C) und/oder in Schritt D) gebildete Membran,
dadurch gekennzeichnet, dass die Katalysatorschicht 0,1 bis 10g/m² einer katalytisch aktiven Substanzen umfasst.

Die gemäß Schritt B) hergestellte Zusammensetzung umfasst Polyazole. Diese Polymere können bereits in Schritt A) zugegeben werden. Des weiteren können diese Polymere auch aus dem Polymer zugrundeliegenden Monomeren, Oligomeren und/oder Vorpolymeren während dem Erwärmen gemäß Schritt B) erhalten werden.

Polymere auf Basis von Polyazol enthalten wiederkehrende Azoleinheiten der allgemeinen Formel (I) und/oder (II) und/oder (III) und/oder (IV) und/oder (V) und/oder (VI) und/oder (VII) und/oder (VIII) und/oder (IX) und/oder (X) und/oder (XI) und/oder (XII) und/oder (XIII) und/oder (XIV) und/oder (XV) und/oder (XVI) und/oder (XVI) und/oder (XVII) und/oder (XVIII) und/oder (XIX) und/oder (XX) und/oder (XXI) und/oder (XXII) 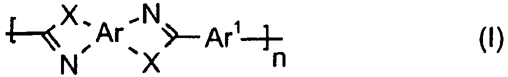 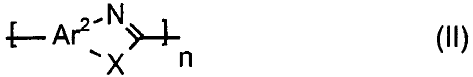 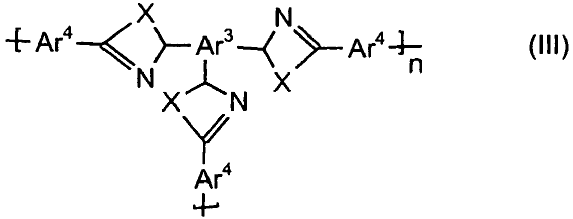 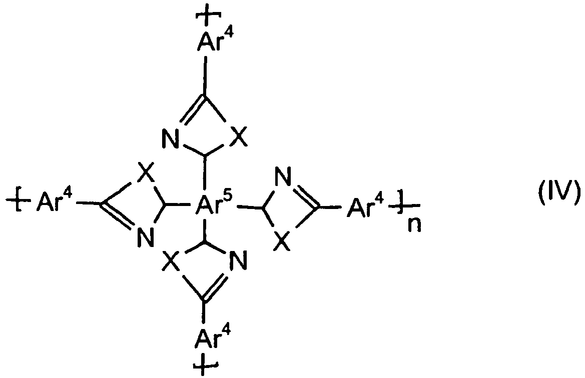 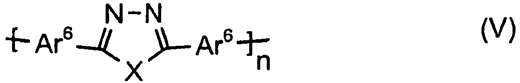 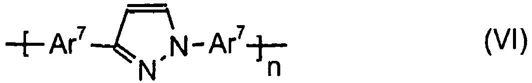 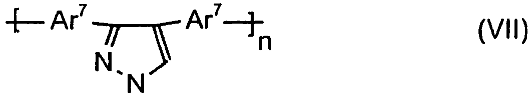 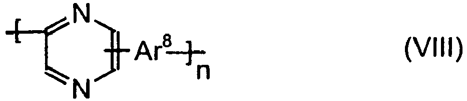 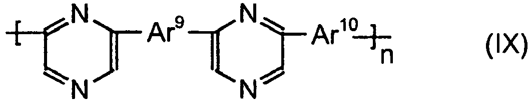 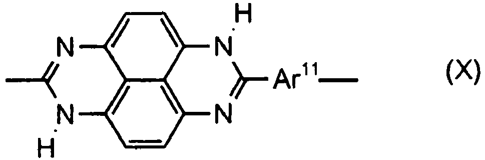 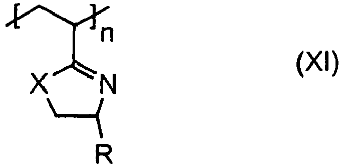 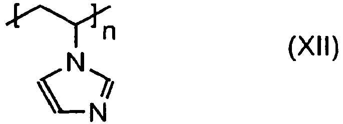 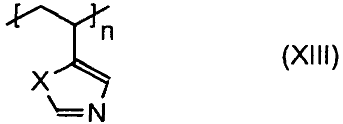 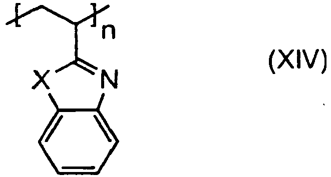 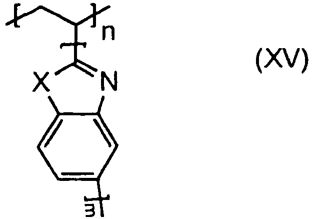 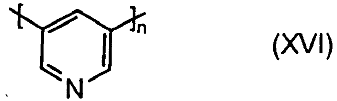 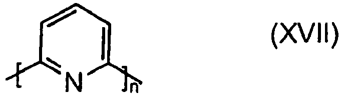 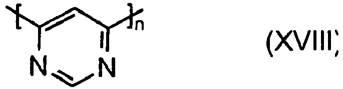 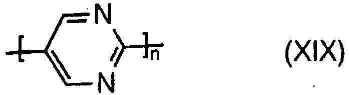 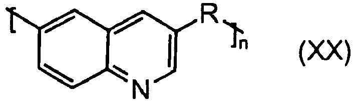 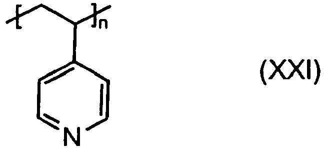 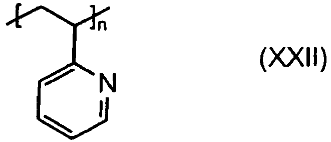 worin
- Ar: gleich oder verschieden sind und für eine vierbindige aromatische oder heteroaromatische Gruppe, die ein- oder mehrkernig sein kann,
- Ar¹: gleich oder verschieden sind und für eine zweibindige aromatische oder heteroaromatische Gruppe, die ein- oder mehrkernig sein kann,
- Ar²: gleich oder verschieden sind und für eine zwei oder dreibindige aromatische oder heteroaromatische Gruppe, die ein- oder mehrkernig sein kann,
- Ar³: gleich oder verschieden sind und für eine dreibindige aromatische oder heteroaromatische Gruppe, die ein- oder mehrkernig sein kann,
- Ar⁴: gleich oder verschieden sind und für eine dreibindige aromatische oder heteroaromatische Gruppe, die ein- oder mehrkernig sein kann,
- Ar⁵: gleich oder verschieden sind und für eine vierbindige aromatische oder heteroaromatische Gruppe, die ein- oder mehrkernig sein kann,
- Ar⁶: gleich oder verschieden sind und für eine zweibindige aromatische oder heteroaromatische Gruppe, die ein- oder mehrkernig sein kann,
- Ar⁷: gleich oder verschieden sind und für eine zweibindige aromatische oder heteroaromatische Gruppe, die ein- oder mehrkernig sein kann,
- Ar⁸: gleich oder verschieden sind und für eine dreibindige aromatische oder heteroaromatische Gruppe, die ein- oder mehrkernig sein kann,
- Ar⁹: gleich oder verschieden sind und für eine zwei- oder drei- oder vierbindige aromatische oder heteroaromatische Gruppe, die ein- oder mehrkernig sein kann,
- Ar¹⁰: gleich oder verschieden sind und für eine zwei- oder dreibindige aromatische oder heteroaromatische Gruppe, die ein- oder mehrkernig sein kann,
- Ar¹¹: gleich oder verschieden sind und für eine zweibindige aromatische oder heteroaromatische Gruppe, die ein- oder mehrkernig sein kann,
- X: gleich oder verschieden ist und für Sauerstoff, Schwefel oder eine Aminogruppe, die ein Wasserstoffatom, eine 1- 20 Kohlenstoffatome aufweisende Gruppe, vorzugsweise eine verzweigte oder nicht verzweigte Alkyl- oder Alkoxygruppe, oder eine Arylgruppe als weiteren Rest trägt
- R: gleich oder verschieden für Wasserstoff, eine Alkylgruppe und eine aromatische Gruppe steht und
- n, m: eine ganze Zahl größer gleich 10, bevorzugt größer gleich 100 ist.

Erfindungsgemäß bevorzugte aromatische oder heteroaromatische Gruppen leiten sich von Benzol, Naphthalin, Biphenyl, Diphenylether, Diphenylmethan, Diphenyldimethylmethan, Bisphenon, Diphenylsulfon, Thiophen, Furan, Pyrrol, Thiazol, Oxazol, Imidazol, Isothiazol, Isoxazol, Pyrazol, 1,3,4-Oxadiazol, 2,5-Diphenyl-1,3,4-oxadiazol, 1,3,4-Thiadiazol, 1,3,4-Triazol, 2,5-Diphenyl-1,3,4-triazol, 1,2,5-Triphenyl-1,3,4-triazol, 1,2,4-Oxadiazol, 1,2,4-Thiadiazol, 1,2,4-Triazol, 1,2,3-Triazol, 1,2,3,4-Tetrazol, Benzo[b]thiophen, Benzo[b]furan, Indol, Benzo[c]thiophen, Benzo[c]furan, Isoindol, Benzoxazol, Benzothiazol, Benzimidazol, Benzisoxazol, Benzisothiazol, Benzopyrazol, Benzothiadiazol, Benzotriazol, Dibenzofuran, Dibenzothiophen, Carbazol, Pyridin, Bipyridin, Pyrazin, Pyrazol, Pyrimidin, Pyridazin, 1,3,5-Triazin, 1,2,4-Triazin, 1,2,4,5-Triazin, Tetrazin, Chinolin, Isochinolin, Chinoxalin, Chinazolin, Cinnolin, 1,8-Naphthyridin, 1,5-Naphthyridin, 1,6-Naphthyridin, 1,7-Naphthyridin, Phthalazin, Pyridopyrimidin, Purin, Pteridin oder Chinolizin, 4H-Chinolizin, Diphenylether, Anthracen, Benzopyrrol, Benzooxathiadiazol, Benzooxadiazol, Benzopyridin, Benzopyrazin, Benzopyrazidin, Benzopyrimidin, Benzotriazin, Indolizin, Pyridopyridin, Imidazopyrimidin, Pyrazinopyrimidin, Carbazol, Aciridin, Phenazin, Benzochinolin, Phenoxazin, Phenothiazin, Acridizin, Benzopteridin, Phenanthrolin und Phenanthren ab, die gegebenenfalls auch substituiert sein können.

Dabei ist das Substitionsmuster von Ar¹, Ar¹, Ar⁶, Ar⁷, Ar⁸, Ar⁹, Ar¹⁰, Ar¹¹ beliebig, im Falle vom Phenylen beispielsweise kann Ar¹, Ar⁴, Ar⁶, Ar⁷, Ar⁸, Ar⁹, Ar¹⁰, Ar¹¹ ortho-, meta- und para-Phenylen sein. Besonders bevorzugte Gruppen leiten sich von Benzol und Biphenylen, die gegebenenfalls auch substituiert sein können, ab.

Bevorzugte Alkylgruppen sind kurzkettige Alkylgruppen mit 1 bis 4 Kohlenstoffatomen, wie z. B. Methyl-, Ethyl-, n- oder i-Propyl- und t-Butyl-Gruppen.

Bevorzugte aromatische Gruppen sind Phenyl- oder Naphthyl-Gruppen. Die Alkylgruppen und die aromatischen Gruppen können substituiert sein.

Bevorzugte Substituenten sind Halogenatome wie z. B. Fluor, Aminogruppen, Hydroxygruppen oder kurzkettige Alkylgruppen wie z. B. Methyl- oder Ethylgruppen.

Bevorzugt sind Polyazole mit wiederkehrenden Einheiten der Formel (I) bei denen die Reste X innerhalb einer wiederkehrenden Einheit gleich sind.

Die Polyazole können grundsätzlich auch unterschiedliche wiederkehrende Einheiten aufweisen, die sich beispielsweise in ihrem Rest X unterscheiden. Vorzugsweise jedoch weist es nur gleiche Reste X in einer wiederkehrenden Einheit auf.

Weitere bevorzugte Polyazol-Polymere sind Polyimidazole, Polybenzthiazole, Polybenzoxazole, Polyoxadiazole, Polyquinoxalines, Polythiadiazole Poly(pyridine), Poly(pyrimidine), und Poly(tetrazapyrene).

In einer weiteren Ausführungsform der vorliegenden Erfindung ist das Polymer enthaltend wiederkehrende Azoleinheiten ein Copolymer oder ein Blend, das mindestens zwei Einheiten der Formel (I) bis (XXII) enthält, die sich voneinander unterscheiden. Die Polymere können als Blockcopolymere (Diblock, Triblock), statistische Copolymere, periodische Copolymere und/oder alternierende Polymere vorliegen.

In einer besonders bevorzugten Ausführungsform der vorliegenden Erfindung ist das Polymer enthaltend wiederkehrende Azoleinheiten ein Polyazol, das nur Einheiten der Formel (I) und/oder (II) enthält.

Die Anzahl der wiederkehrende Azoleinheiten im Polymer ist vorzugsweise eine ganze Zahl größer gleich 10. Besonders bevorzugte Polymere enthalten mindestens 100 wiederkehrende Azoleinheiten.

Im Rahmen der vorliegenden Erfindung sind Polymere enthaltend wiederkehrenden Benzimidazoleinheiten bevorzugt. Einige Beispiele der äußerst zweckmäßigen Polymere enthaltend wiederkehrende Benzimidazoleinheiten werden durch die nachfolgende Formeln wiedergegeben: 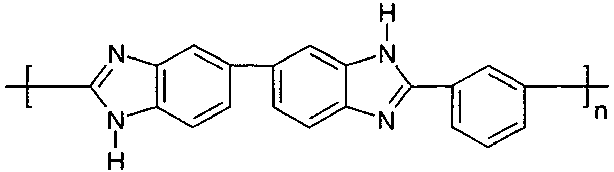 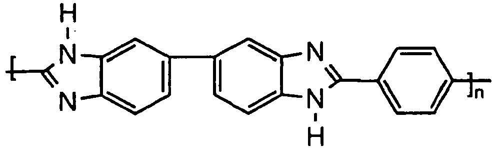 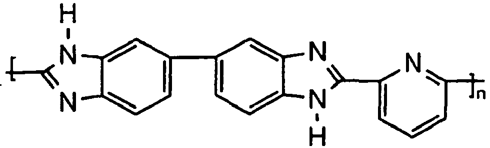 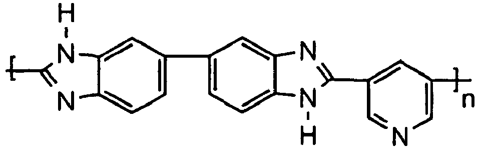 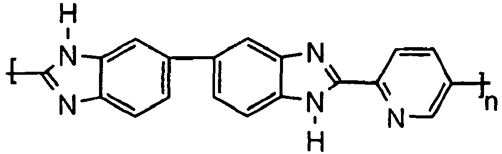 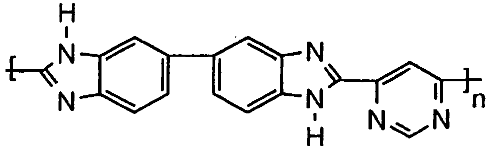 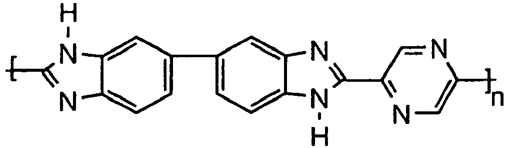 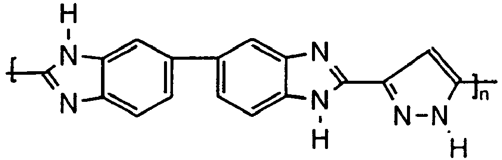 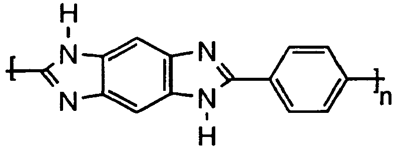 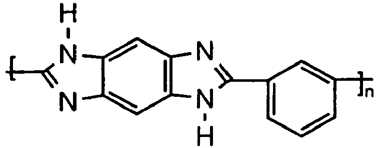 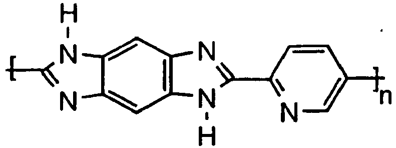 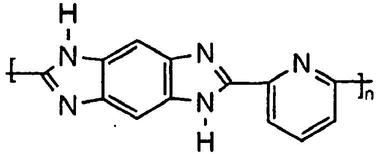 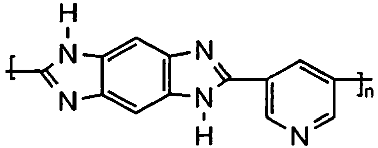 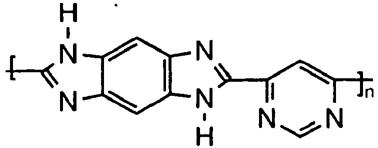 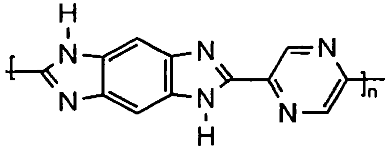 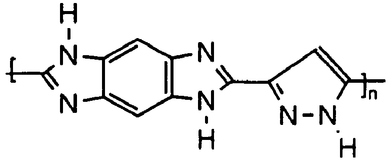 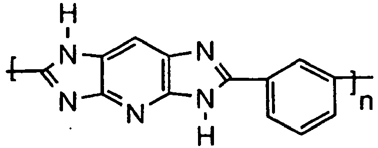 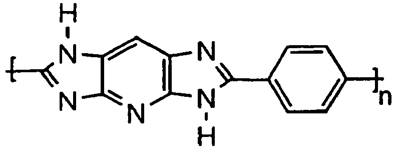 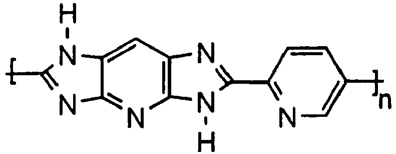 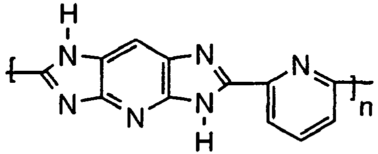 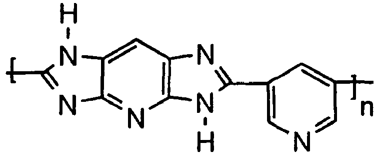 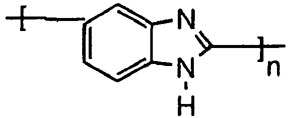 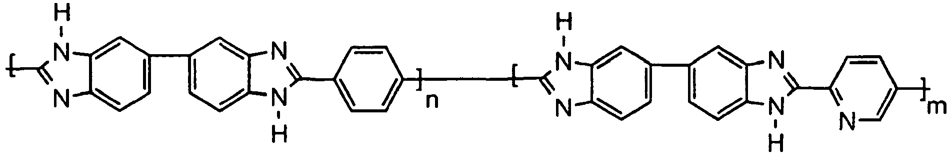 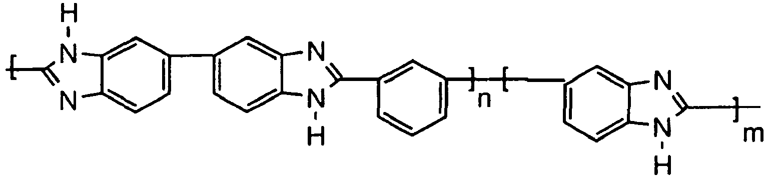 wobei n und m eine ganze Zahl größer gleich 10, vorzugsweise größer gleich 100 ist.

Die in Schritt A) eingesetzten Polyazole, insbesondere jedoch die Polybenzimidazole zeichnen sich durch ein hohes Molekulargewicht aus. Gemessen als Intrinsische Viskosität beträgt diese mindestens 0,2 dl/g, vorzugsweise 0,3 bis 10 dl/g und besonders bevorzugt 1 bis 5 dl/g.

Des weiteren können die Polyazole auch in Schritt B) durch Erwärmen hergestellt werden. Hierzu können der Mischung gemäß Schritt A) ein oder mehrere Verbindungen beigefügt werden, die unter Einwirkung von Wärme gemäß Schritt B) zur Bildung von Polyazolen geeignet sind.

Hierzu sind Mischungen geeignet, die ein oder mehreren aromatische und/oder heteroaromatische Tetra-Amino-Verbindungen und eine oder mehrere aromatische und/oder heteroaromatische Carbonsäuren oder deren Derivate, die mindestens zwei Säuregruppen pro Carbonsäure-Monomer umfassen. Des weiteren können ein oder mehrere aromatische und/oder heteroaromatische Diaminocarbonsäuren zur Herstellung von Polyazolen eingesetzt werden.

Zu den aromatischen und heteroaromatischen Tetra-Amino-Verbindungen gehören unter anderem 3,3',4,4'-Tetraaminobiphenyl, 2,3,5,6-Tetraaminopyridin, 1,2,4,5-Tetraaminobenzol, 3,3',4,4'-Tetraaminodiphenylsulfon, 3,3',4,4'-Tetraaminodiphenylether, 3,3',4,4'-Tetraaminobenzophenon, 3,3',4,4'-Tetraaminodiphenylmethan und 3,3',4,4'-Tetraaminodiphenyldimethylmethan sowie deren Salze, insbesondere deren Mono-, Di-, Tri- und Tetrahydrochloridderivate. Hiervon sind 3,3',4,4'-Tetraaminobiphenyl, 2,3,5,6-Tetraaminopyridin und 1,2,4,5-Tetraaminobenzol besonders bevorzugt.

Des weiteren kann die Mischung A) aromatische und/oder heteroaromatische Carbonsäuren umfassen. Hierbei handelt es sich um Dicarbonsäuren und Tricarbonsäuren und Tetracarbonsäuren bzw. deren Estern oder deren Anhydride oder deren Säurehalogenide, insbesondere deren Säurehalogenide und/oder Säurebromide. Vorzugsweise handelt es sich bei den aromatischen Dicarbonsäuren um Isophthalsäure, Terephthalsäure, Phthalsäure, 5-Hydroxyisophthalsäure, 4-Hydroxyisophthalsäure, 2-Hydroxyterephthalsäure, 5-Aminoisophthalsäure, 5-N,N-Dimethylaminoisophthalsäure, 5-N,N-Diethylaminoisophthalsäure, 2,5-Dihydroxyterephthalsäure, 2,6-Dihydroxyisophthalsäure, 4,6-Dihydroxyisophthalsäure, 2,3-Dihydroxyphthalsäure, 2,4-Dihydroxyphthalsäure. 3,4-Dihydroxyphthalsäure, 3-Fluorophthalsäure, 5-Fluoroisophthalsäure, 2-Fluoroterphthalsäure, Tetrafluorophthalsäure, Tetrafluoroisophthalsäure, Tetrafluoroterephthalsäure,1,4-Naphthalindicarbonsäure, 1,5-Naphthalindicarbonsäure, 2,6-Naphthalindicarbonsäure, 2,7-Naphthalindicarbonsäure, Diphensäure, 1,8-dihydroxynaphthalin-3,6-dicarbonsäure, Diphenylether-4,4'-dicarbonsäure, Benzophenon-4,4'-dicarbonsäure, Diphenylsulfon-4,4'-dicarbonsäure, Biphenyl-4,4'-dicarbonsäure, 4-Trifluoromethylphthalsäure, 2,2-Bis(4-carboxyphenyl)hexafluoropropan, 4,4'-Stilbendicarbonsäure, 4-Carboxyzimtsäure, bzw. deren C1-C20-Alkyl-Ester oder C5-C12-Aryl-Ester, oder deren Säureanhydride oder deren Säurechloride.

Bei den aromatischen Tricarbonsäuren bzw. deren C1-C20-Alkyl-Ester oder C5-C12-ArylEster oder deren Säureanhydride oder deren Säurechloride handelt es sich bevorzugt um 1,3,5-Benzol-tricarbonsäure (Trimesic acid), 1,2,4-Benzol-tricarbonsäure (Trimellitic acid), (2-Carboxyphenyl)iminodiessigsäure, 3,5,3'-Biphenyltricarbonsäure, 3,5,4'-Biphenyltricarbonsäure.

Bei den aromatischen Tetracarbonsäuren bzw. deren C1-C20-Alkyl-Ester oder C5-C12-ArylEster oder deren Säureanhydride oder deren Säurechloride handelt es sich bevorzugt um 3,5,3',5'-biphenyltetracarbonsäure, 1,2,4,5-Benzoltetracarbonsäure, Benzophenontetracarbonsäure, 3,3',4,4'-Biphenyltetracarbonsäure, 2,2',3,3'-Biphenyltetracarbonsäure, 1,2,5,6-Naphthalintetracarbonsäure, 1,4,5,8-Naphthalintetracarbonsäure.

Bei den heteroaromatischen Carbonsäuren handelt es sich um heteroaromatischen Dicarbonsäuren und Tricarbonsäuren und Tetracarbonsäuren bzw. deren Estern oder deren Anhydride. Als heteroaromatische Carbonsäuren werden aromatische Systeme verstanden welche mindestens ein Stickstoff, Sauerstoff, Schwefel oder Phosphoratom im Aromaten enthalten. Vorzugsweise handelt es sich um Pyridin-2,5-dicarbonsäure, Pyridin-3,5-dicarbonsäure, Pyridin-2,6-dicarbonsäure, Pyridin-2,4-dicarbonsäure, 4-Phenyl-2,5-pyridindicarbonsäure, 3,5-Pyrazoldicarbonsäure, 2,6 -Pyrimidindicarbonsäure, 2,5-Pyrazindicarbonsäure, 2,4,6-Pyridintricarbonsäure, Benzimidazol-5,6-dicarbonsäure. Sowie deren C1-C20-Alkyl-Ester oder C5-C12-Aryl-Ester, oder deren Säureanhydride oder deren Säurechloride.

Der Gehalt an Tricarbonsäure bzw. Tetracarbonsäuren (bezogen auf eingesetzte Dicarbonsäure) beträgt zwischen 0 und 30 Mol-%, vorzugsweise 0,1 und 20 Mol %, insbesondere 0,5 und 10 Mol-%.

Des weiteren kann die Mischung A) auch aromatische und heteroaromatische Diaminocarbonsäuren enthalten. Zu diesen gehört unter anderem Diaminobenzoesäure, 4-Phenoxycarbonyl-3,'4'-diaminodiptienylether und deren Mono- und Dihydrochloridderivate.

Bevorzugt werden in Schritt A) Mischungen von mindestens 2 verschiedenen aromatischen Carbonsäuren einzusetzen. Besonders bevorzugt werden Mischungen eingesetzt, die neben aromatischen Carbonsäuren auch heteroaromatische Carbonsäuren enthalten. Das Mischungsverhältnis von aromatischen Carbonsäuren zu heteroaromatischen Carbonsäuren beträgt zwischen 1:99 und 99:1, vorzugsweise 1:50 bis 50:1.

Bei diesen Mischungen handelt es sich insbesondere um Mischungen von N-heteroaromatischen Dicarbonsäuren und aromatischen Dicarbonsäuren. Nicht limitierende Beispiele für Dicarbonsäuren sind Isophthalsäure, Terephthalsäure, Phthalsäure, 2,5-Dihydroxyterephthalsäure, 2,6-Dihydroxyisophthalsäure, 4,6-Dihydroxyisophthalsäure, 2,3-Dihydroxyphthalsäure, 2,4-Dihydroxyphthalsäure. 3,4-Dihydroxyphthalsäure,1,4-Naphthalindicarbonsäure, 1,5-Naphthalindicarbonsäure, 2,6-Naphthalindicarbonsäure, 2,7-Naphthalindicarbonsäure, Diphensäure, 1,8-dihydroxynaphthalin-3,6-dicarbonsäure, Diphenylether-4,4'-dicarbonsäure, Benzophenon-4,4'-dicarbonsäure, Diphenylsulfon-4,4'-dicarbonsäure, Biphenyl-4,4'-dicarbonsäure, 4-Trifluoromethylphthalsäure, Pyridin-2,5-dicarbonsäure, Pyridin-3,5-dicarbonsäure, Pyridin-2,6-dicarbonsäure, Pyridin-2,4-dicarbonsäure, 4-Phenyl-2,5-pyridindicarbonsäure, 3,5-Pyrazoldicarbonsäure, 2,6 - Pyrimidindicarbonsäure,2,5-Pyrazindicarbonsäure.

Soll ein möglichst hohes Molekulargewicht erzielt werden, so liegt das Molverhältnis von Carbonsäuregruppen zu Aminogruppen bei der Umsetzung von Tetra-Amino-Verbindungen mit einer oder mehreren aromatischen Carbonsäuren bzw. deren Estern, die mindestens zwei Säuregruppen pro Carbonsäure-Monomer enthalten, vorzugsweise in der Nähe von 1:2.

Die in Schritt A) hergestellte Mischung umfasst vorzugsweise mindestens 0,5 Gew.-%, insbesondere 1 bis 30 Gew.-% und besonders bevorzugt 2 bis 15 Gew.-% Monomere zur Herstellung von Polyazolen.

Werden die Polyazole unmittelbar in der Polyphosphorsäure aus den Monomeren hergestellt, zeichnen sich die Polyazole durch ein hohes Molekulargewicht aus. Dies gilt insbesondere für die Polybenzimidazole. Gemessen als Intrinsische Viskosität liegt diese vorzugsweise im Bereich von 0,3 bis 10 dl/g, insbesondere im Bereich von 1 bis 5 dl/g.

Insofern die Mischung gemäß Schritt A) auch Tricarbonsäuren bzw. Tetracarbonsäre enthält wird hierdurch eine Verzweigung/ Vernetzung des gebildeten Polymeren erzielt. Diese trägt zur Verbesserung der mechanischen Eigenschaft bei.

Gemäß einem weiteren Aspekt der vorliegenden Erfindung umfasst die in Schritt A) hergestellte Mischung Verbindungen, die unter Einwirkung von Wärme gemäß Schritt B) zur Bildung von Polyazolen geeignet sind, wobei diese Verbindungen durch Umsetzung von einem oder mehreren aromatischen und/oder heteroaromatischen Tetra-Amino-Verbindungen mit einer oder mehreren aromatischen und/oder heteroaromatischen Carbonsäuren bzw. deren Derivate, die mindestens zwei Säuregruppen pro Carbonsäure-Monomer enthalten, oder von einer oder mehreren aromatischen und/oder heteroaromatischen Diaminocarbonsäuren in der Schmelze bei Temperaturen von bis zu 400°C, insbesondere bis zu 350°C, bevorzugt bis zu 280°C erhältlich sind. Die zur Herstellung dieser Präpolymere einzusetzenden Verbindungen wurden zuvor dargelegt.

Bei der in Schritt A) verwendeten Polyphosphorsäure handelt es sich um handelsübliche Polyphosphorsäuren wie diese beispielsweise von Riedel-de Haen erhältlich sind. Die Polyphosphorsäuren Hₙ₊₂PₙO₃ₙ₊₁ (n>1) besitzen üblicherweise einen Gehalt berechnet als P₂O₅ (acidimetrisch) von mindestens 83%. Anstelle einer Lösung der Monomeren kann auch eine Dispersion/Suspension erzeugt werden.

Die in Schritt A) und/oder Schritt B) erzeugte Mischung kann auch noch gelöstes, dispergiertes oder suspendiertes Polymer enthalten. Derartige Polymere können auch nach Schritt B) der Mischung zugegeben werden.

Zu den bevorzugten Polymeren gehören unter anderem Polyolefine, wie Poly(cloropren), Polyacetylen, Polyphenylen, Poly(*p*-xylylen), Polyarylmethylen, Polyarmethylen, Polystyrol, Polymethylstyrol, Polyvinylalkohol, Polyvinylacetat, Polyvinylether, Polyvinylamin, Poly(N-vinylacetamid), Polyvinylimidazol, Polyvinylcarbazol, Polyvinylpyrrolidon, Polyvinylpyridin, Polyvinylchlorid, Polyvinylidenchlorid, Polytetrafluorethylen, Polyhexafluorpropylen, Copolymere von PTFE mit Hexafluoropropylen, mit Perfluorpropylvinylether, mit Trifluoronitrosomethan, mit Sulfonylfluoridvinylether, mit Carbalkoxy-perfluoralkoxyvinylether, Polychlortrifluorethylen, Polyvinylfluorid, Polyvinylidenfluorid, Polyacrolein, Polyacrylamid, Polyacrylnitril, Polycyanacrylate, Polymethacrylimid, Cycloolefinische Copolymere, insbesondere aus Norbomen;
Polymere mit C-O-Bindungen in der Hauptkette, beispielsweise Polyacetal, Polyoxymethylen, Polyether, Polypropylenoxid, Polyepichlorhydrin, Polytetrahydrofuran, Polyphenylenoxid, Polyetherketon, Polyester, insbesondere Polyhydroxyessigsäure, Polyethylenterephthalat, Polybutylenterephthalat, Polyhydroxybenzoat, Polyhydroxypropionsäure, Polypivalolacton, Polycaprolacton, Polymalonsäure, Polycarbonat;
Polymere C-S-Bindungen in der Hauptkette, beispielsweise Polysulfidether, Polyphenylensulfid, Polyethersulfon;
Polymere C-N-Bindungen in der Hauptkette, beispielsweise Polyimine, Polyisocyanide,Polyetherimin, Polyanilin, Polyamide, Polyhydrazide, Polyurethane, Polyimide, Polyazole, Polyazine;
Flüssigkristalline Polymere, insbesondere Vectra sowie Anorganische Polymere, beispielsweise Polysilane, Polycarbosilane, Polysiloxane, Polykieselsäure, Polysilikate, Silicone, Polyphosphazene und Polythiazyl.

Des weiteren kann die in Schritt A) und/oder Schritt B) erzeugte Mischung auch Polymere mit kovalent gebundenen Säuregruppen umfassen. Diese Polymere können der Mischung auch nach Schritt B) zugesetzt werden. Diese Säuregruppen umfassen insbesondere Sulfonsäuregruppen. Die mit Sulfonsäuregruppen modifizierten Polymere besitzen vorzugsweise einen Gehalt an Sulfonsäuregruppen im Bereich von 0,5 bis 3 meq/g. Dieser Wert wird über die sog. Ionenaustauschkapazität (IEC) bestimmt.

Zur Messung der IEC werden die Sulfonsäuregruppen in die freie Säure überführt. Hierzu wird das Polymere auf bekannte Weise mit Säure behandelt, wobei überschüssige Säure durch Waschen entfernt wird. So wird das sulfonierte Polymer zunächst 2 Stunden in siedendem Wasser behandelt. Anschließend wird überschüssiges Wasser abgetupt und die Probe während 15 Stunden bei 160°C im Vakkumtrockenschrank bei p<1 mbar getrocknet. Dann wird das Trockengewicht der Membran bestimmt. Das so getrocknete Polymer wird dann in DMSO bei 80°C während 1 h gelöst. Die Lösung wird anschließend mit 0,1 M NaOH titriert. Aus dem Verbrauch der Säure bis zum Equivalentpunkt und dem Trockengewicht wird dann die Ionenaustauschkapazität (IEC) berechnet.

Derartige Polymere sind in der Fachwelt bekannt. So können Sulfonsäuregruppen enthaltende Polymere beispielsweise durch Sulfonierung von Polymeren hergestellt werden. Verfahren zur Sulfonierung von Polymeren sind in F. Kucera et. al. Polymer Engineering and Science1988, Vol. 38, No 5, 783-792 beschrieben. Hierbei können die Sulfonierungsbedingungen so gewählt werden, dass ein niedriger Sulfonierungsgrad entsteht (DE-A-19959289).

So wurde eine weitere Klasse nichtfluorierter Polymere durch Sulfonierung von hochtemperaturstabilen Thermoplasten entwickelt. So sind sulfonierte Polyetherketone (DE-A-4219077, WO96/01177), sulfonierte Polysulfone (J. Membr. Sci. 83 (1993) p.211) oder sulfoniertes Polyphenylensulfid (DE-A-19527435) bekannt.

US-A-6110616 beschreibt Copolymere aus Butadien und Styrol und deren anschliesende Sulfonierung zur Verwendung für Brennstoffzellen.

Des weiteren können derartige Polymere auch durch Polyreaktionen von Monomeren erhalten werden, die Säuregruppen umfassen. So können perfluorinierte Polymere wie in US-A-5422411 beschrieben durch Copolymerisation aus Trifluorostyrol und sulfonylmodifiziertem Trifuorostyrol hergestellt werden.

Zu diesen Perfluorosulfonsäurepolymeren gehört unter anderem Nafion^{®} (US-A-3692569). Dieses Polymer kann wie in US-A-4453991 beschrieben in Lösung gebracht und dann als lonomer eingesetzt werden.

Zu den bevorzugten Polymeren mit Säuregruppen gehören unter anderem sulfonierte Polyetherketone, sulfonierte Polysulfone, sulfonierte Polyphenylensulfide, perfluorinierte sulfonsäuregruppenhaltige Polymere, wie in US-A-3692569, US-A-5422411 und US-A-6110616 beschrieben.

Die in Schritt A) erhaltene Mischung wird gemäß Schritt B) auf eine Temperatur von bis zu 400°C, insbesondere 350°C, vorzugsweise bis zu 280°C, insbesondere 100°C bis 250°C und besonders bevorzugt im Bereich von 200°C bis 250°C erhitzt. Hierbei wird ein Inertgas, beispielsweise Stickstoff oder ein Edelgas, wie Neon, Argon, eingesetzt.

Es hat sich weiterhin gezeigt, dass bei Verwendung von aromatischen Dicarbonsäuren (oder heteroaromatischen Dicarbonsäure) wie Isophthalsäure, Terephthalsäure, 2,5-Dihydroxyterephthalsäure, 4,6-Dihydroxyisophthalsäure, 2,6-Dihydroxyisophthalsäure, Diphensäure, 1,8-Dihydroxynaphthalin-3,6-Dicarbonsäure, Diphenylether-4,4'-Dicarbonsäure, Benzophenon-4,4'-dicarbonsäure, Diphenylsulfon-4,4'-dicarbonsäure, Biphenyl-4,4'-dicarbonsäure, 4-Trifluoromethylphthalsäure, Pyridin-2,5-dicarbonsäure, Pyridin-3,5-dicarbonsäure, Pyridin-2,6-dicarbonsäure, Pyridin-2,4-dicarbonsäure, 4-Phenyl-2,5-pyridindicarbonsäure, 3,5-Pyrazoldicarbonsäure, 2,6 -Pyrimidindicarbonsäure,2,5-Pyrazindicarbonsäure, die Temperatur in Schritt B) im Bereich von bis zu 300°C, vorzugsweise zwischen 100°C und 250°C, günstig ist.

In einer Variante des Verfahrens kann die Erwärmung gemäß Schritt B) nach der Bildung eines flächigen Gebildes gemäß Schritt C) erfolgen.

Die in Schritt A) und/oder Schritt B) hergestellte Mischung kann zusätzlich noch organische Lösungsmittel enthalten. Diese können die Verarbeitbarkeit positiv beeinflussen. So kann beispielsweise die Rheologie der Lösung verbessert werden, so dass diese leichter extrudiert oder gerakelt werden kann.

Zur weiteren Verbesserung der anwendungstechnischen Eigenschaften können der Membran zusätzlich noch Füllstoffe, insbesondere protonenleitende Füllstoffe, sowie zusätzliche Säuren zugesetzt werden. Die Zugabe kann beispielsweise bei Schritt A), Schritt B) und/oder Schritt C) erfolgen. Des weiteren können diese Additive, falls diese in flüssiger Form vorliegen, auch nach der Polymerisation gemäß Schritt D) beigefügt werden.

Nicht limitierende Beispiele für Protonenleitende Füllstoffe sind

| | |
|---|---|
| Sulfate wie: | CsHSO₄, Fe(SO₄)₂, (NH₄)₃H(SO₄)₂, LiHSO₄, NaHSO₄, KHSO₄, RbSO₄, LiN₂H₅SO₄, NH₄HSO₄, |
| Phosphate wie | Zr₃(PO₄)₄, Zr(HPO₄)₂, HZr₂(PO₄)₃, UO₂PO₄.3H₂O, H₈UO₂PO₄, Ce(HPO₄)₂, Ti(HPO₄)₂, KH₂PO₄, NaH₂PO₄, LiH₂PO₄, NH₄H₂PO₄, CsH₂PO₄, CaHPO₄, MgHPO₄, HSbP₂O₈, HSb₃P₂O₁₄, H₅Sb₅P₂O₂₀, |
| Polysäure wie | H₃PW₁₂O₄₀.nH₂O (n=21-29), H₃SiW₁₂O₄₀.nH₂O (n=21-29), HₓWO₃, HSbWO₆, H₃PMo₁₂O₄₀, H₂Sb₄O₁₁, HTaWO₆, HNbO₃, HTiNbO₅, HTiTaO₅, HSbTeO₆, H₅Ti₄O₉, HSbO₃, H₂MoO₄ |
| Selenite und Arsenide wie | (NH₄)₃H(SeO₄)₂, UO₂AsO₄, (NH₄)₃H(SeO₄)₂, KH₂AsO₄, Cs₃H(SeO₄)₂, Rb₃H(SeO₄)₂. |
| Phosphide wie | ZrP, TiP, HfP |
| Oxide wie | Al₂O₃, Sb₂O₅, ThO₂, SnO₂, ZrO₂, MoO₃ |
| Silikate wie | Zeolithe, Zeolithe(NH₄+), Schichtsilikate, Gerüstsilikate, H-Natrolite, H-Mordenite, NH₄-Analcine, NH₄-Sodalite, NH₄-Gallate, H-Montmorillonite |
| Säuren wie | HClO₄, SbF₅ |
| Füllstoffe wie | Carbide, insbesondere SiC, Si₃N₄, Fasern, insbesondere Glasfasern, Glaspulvern und/oder Polymerfasern, bevorzugt auf Basis von Polyazolen. |

Diese Additive können in der protonenleitenden Polymermembran in üblichen Mengen enthalten sein, wobei jedoch die positiven Eigenschaften, wie hohe Leitfähigkeit, hohe Lebensdauer und hohe mechanische Stabilität der Membran durch Zugabe von zu großen Mengen an Additiven nicht allzu stark beeinträchtigt werden sollten. Im allgemeinen umfaßt die Membran nach der Behandlung gemäß Schritt D) höchstens 80 Gew.-%, vorzugsweise höchstens 50 Gew.-% und besonders bevorzugt höchstens 20 Gew.-% Additive.

Als weiteres kann diese Membran auch perfluorierte Sulfonsäure-Additive (vorzugsweise 0,1-20 Gew.-%, bevorzugt 0,2-15 Gew.-%, ganz bevorzugt 0,2- 10 Gew.-%) enthalten. Diese Additive führen zur Leistungsverbesserung, in der Nähe der Kathode zur Erhöhung der Sauerstofflöslichkeit und Sauerstoffdiffusion und zur Verringerung der Adsorbtion von Phosphorsäure und Phosphat zu Platin. (Electrolyte additives for phosphoric acid fuel cells. Gang, Xiao; Hjuler, H. A.; Olsen, C.; Berg, R. W.; Bjerrum, N. J.. Chem. Dep. A, Tech. Univ. Denmark, Lyngby, Den. J. Electrochem. Soc. (1993), 140(4), 896-902 und Perfluorosulfonimide as an additive in phosphoric acid fuel cell. Razaq, M.; Razaq, A.; Yeager, E.; DesMarteau, Darryl D.; Singh, S. Case Cent. Electrochem. Sci., Case West. Reserve Univ., Cleveland, OH, USA. J. Electrochem. Soc. (1989), 136(2), 385-90.) Nicht limitierende Beispiele für persulfonierte Additive sind: Trifluomethansulfonsäure, Kaliumtrifluormethansulfonat, Natriumtrifluormethansulfonat, Lithiumtrifluormethansulfonat, Ammoniumtrifluormethansulfonat, Kaliumperfluorohexansulfonat, Natriumperfluorohexansulfonat, Lithiumperfluorohexansulfonat, Ammoniumperfluorohexansulfonat, Perfluorohexansulfonsäure, Kaliumnonafluorbutansulfonat, Natriumnonafluorbutansulfonat, Lithiumnonafluorbutansulfonat, Ammoniumnonafluorbutansulfonat, Cäsiumnonafluorbutansulfonat, Triethylammoniumperfluorohexasulfonat, Perflurosulfoimide und Nafion.

Die Bildung des flächigen Gebildes gemäß Schritt C) erfolgt mittels an sich bekannter Maßnahmen (Gießen, Sprühen, Rakeln, Extrusion) die aus dem Stand der Technik zur Polymerfilm-Herstellung bekannt sind. Als Träger sind alle unter den Bedingungen als inert zu bezeichnenden Träger geeignet. Zu diesen Trägern gehören insbesondere Folien aus Polyethylenterephthalat (PET), Polytetrafluorethylen (PTFE), Polyhexafluorpropylen, Copolymere von PTFE mit Hexafluoropropylen, Polyimiden, Polyphenylensulfiden (PPS) und Polypropylen (PP).

Zur Einstellung der Viskosität kann die Lösung gegebenenfalls mit einem leicht verdampfbaren organischen Lösungsmittel versetzt werden. Hierdurch kann die Viskosität auf den gewünschten Wert eingestellt und die Bildung der Membran erleichtert werden.

Die Dicke des flächigen Gebildes gemäß Schritt C) beträgt vorzugsweise zwischen 10 und 4000 µm, vorzugsweise zwischen 15 und 3500 µm, insbesondere zwischen 20 und 3000 µm, besonders bevorzugt zwischen 30 und 1500µm und ganz besonders bevorzugt zwischen 50 und 1200 µm.

Die Behandlung der Membran in Schritt D) erfolgt insbesondere bei Temperaturen im Bereich von 0°C und 150°C, vorzugsweise bei Temperaturen zwischen 10°C und 120°C, insbesondere zwischen Raumtemperatur (20°C) und 90°C, in Gegenwart von Feuchtigkeit bzw. Wasser und/oder Wasserdampf. Die Behandlung erfolgt vorzugsweise unter Normaldruck, kann aber auch unter Einwirkung von Druck erfolgen. Wesentlich ist, daß die Behandlung in Gegenwart von ausreichender Feuchtigkeit geschieht, wodurch die anwesende Polyphosphorsäure durch partielle Hydrolyse unter Ausbildung niedermolekularer Polyphosphorsäure und/oder Phosphorsäure zur Verfestigung der Membran beiträgt.

Die partielle Hydrolyse der Polyphosphorsäure in Schritt D) führt zu einer Verfestigung der Membran und zu einer Abnahme der Schichtdicke und Ausbildung einer Membran. Die verfestigte Membran hat im allgemeinen eine Dicke zwischen 15 und 3000 µm, vorzugsweise 20 und 2000 µm, insbesondere zwischen 20 und 1500 µm, wobei die Membran selbsttragend ist.

Durch die Verfestigung der Membran gemäß Schritt D) erhöht sich auch deren Härte, die mittels Mikrohärtemessung gemäss DIN 50539 bestimmt werden kann. Dazu wird die Membran mit einem Vickersdiamant innerhalb von 20 s sukzessive bis zu einer Kraft von 3 mN belastet und die Eindringtiefe bestimmt. Demnach beträgt die Härte bei Raumtemperatur mindestens 5 mN/mm² und bevorzugt mindestens 20 mN/mm², ohne dass hierdurch eine Beschränkung erfolgen soll. Bei diesen Härtewerten sind die Membranen im allgemeinen selbsttragend. In der Folge wird die Kraft während 5 s konstant bei 3 mN gehalten und das Kriechen aus der Eindringtiefe berechnet. Bei bevorzugten Membranen beträgt das Kriechen C_{HU} 0,003/20/5 unter diesen Bedingungen weniger als 30%, bevorzugt weniger als 15% und ganz besonders bevorzugt weniger als 5%. Der mittels Mikrohärtemessung bestimmte Modul beträgt YHU mindestens 0,1 MPa, insbesondere mindestens 2 MPa und ganz besonders bevorzugt mindestens 5 MPa, ohne dass hierdurch eine Beschränkung erfolgen soll.
Die Härte der Membran bezieht sich sowohl auf eine Oberfläche, die keine Katalysatorschicht aufweist, als auch auf eine Seite, die eine Katalysatorschicht aufweist.

Die obere Temperaturgrenze der Behandlung gemäß Schritt D) beträgt in der Regel 150°C. Bei extrem kurzer Einwirkung von Feuchtigkeit, beispielsweise von überhitztem Dampf kann dieser Dampf auch heißer als 150°C sein. Wesentlich für die Temperaturobergrenze ist die Dauer der Behandlung.

Die partielle Hydrolyse (Schritt D) kann auch in Klimakammern erfolgen bei der unter definierter Feuchtigkeitseinwirkung die Hydrolyse gezielt gesteuert werden kann. Hierbei kann die Feuchtigkeit durch die Temperatur bzw. Sättigung der kontaktierenden Umgebung beispielsweise Gase wie Luft, Stickstoff, Kohlendioxid oder andere geeignete Gase, oder Wasserdampf gezielt eingestellt werden. Die Behandlungsdauer ist abhängig von den vorstehend gewählten Parametern.

Weiterhin ist die Behandlungsdauer von der Dicke der Membran abhängig.

In der Regel beträgt die Behandlungsdauer zwischen wenigen Sekunden bis Minuten, beispielsweise unter Einwirkung von überhitztem Wasserdampf, oder bis hin zu ganzen Tagen, beispielsweise an der Luft bei Raumtemperatur und geringer relativer Luftfeuchtigkeit. Bevorzugt beträgt die Behandlungsdauer zwischen 10 Sekunden und 300 Stunden, insbesondere 1 Minute bis 200 Stunden.

Wird die partielle Hydrolyse bei Raumtemperatur (20°C) mit Umgebungsluft einer relativen Luftfeuchtigkeit von 40-80% durchgeführt beträgt die Behandlungsdauer zwischen 1 und 200 Stunden.

Die gemäß Schritt D) erhaltene Membran kann selbsttragend ausgebildet werden, d.h. sie kann vom Träger ohne Beschädigung gelöst und anschließend gegebenenfalls direkt weiterverarbeitet werden.

Über den Grad der Hydrolyse, d.h. die Dauer, Temperatur und Umgebungsfeuchtigkeit, ist die Konzentration an Phosphorsäure und damit die Leitfähigkeit der erfindungsgemäßen Polymermembran einstellbar. Erfindungsgemäß wird die Konzentration der Phosphorsäure als Mol Säure pro Mol Wiederholungseinheit des Polymers angegeben. Im Rahmen der vorliegenden Erfindung ist eine Konzentration (Mol Phosporsäure bezogen auf eine Wiederholeinheit der Formel (III), d.h. Polybenzimidazol) zwischen 10 und 80, insbesondere zwischen 12 und 60, bevorzugt. Derartig hohe Dotierungsgrade (Konzentrationen) sind durch Dotieren von Polyazolen mit kommerziell erhältlicher ortho-Phosphorsäure nur sehr schwierig bzw. gar nicht zugänglich.

Zum Aufbringen mindestens einer Katalysatorschicht gemäß Schritt E) können verschiedene Methoden eingesetzt werden. So kann beispielsweise in Schritt C) ein Träger verwendet werden, der mit einer einen Katalysator enthaltenden Beschichtung versehen ist, um die in Schritt C) gebildete Schicht mit einer Katalysatorschicht zu versehen.

Hierbei kann die Membran einseitig oder beidseitig mit einer Katalysatorschicht versehen werden. Wird die Membran nur mit einseitig einer Katalysatorschicht versehen, so muß die gegenüberliegende Seite der Membran mit einer Elektrode verpresst werden, die keine Katalysatorschicht aufweist. Falls beide Seiten der Membran mit einer Katalysatorschicht versehen werden sollen, können die nachfolgenden Methoden auch kombiniert angewendet werden, um ein optimales Ergebnis zu erzielen.

Erfindungsgemäß kann die Katalysatorschicht durch ein Verfahren aufgebracht werden, bei dem eine Katalysator-Suspension eingesetzt wird. Darüber hinaus können auch Pulver verwendet werden, die den Katalysator umfassen.

Die Katalysatorsuspension enthält eine katalytisch aktive Substanz. Zu diesen gehören unter anderem Edelmetalle, insbesondere Platin, Palladium, Rhodium, Iridium und/oder Ruthenium. Diese Substanzen können auch in Form von Legierungen unter einander eingesetzt werden. Des weiteren können diese Substanzen auch in Legierung mit unedlen Metallen, wie beispielsweise Cr, Zr, Ni, Co und/oder Ti verwendet werden. Darüber hinaus können auch die Oxide der zuvor genannten Edelmetalle und/oder unedlen Metalle eingesetzt werden
Gemäß einem besonderen Aspekt der vorliegenden Erfindung werden die katalytisch aktiven Verbindungen in Form von Partikeln eingesetzt, die vorzugsweise eine Größe im Bereich von 1 bis 1000 nm, insbesondere 10 bis 200 nm und bevorzugt 20 bis 100 nm aufweisen.

Die katalytisch aktiven Partikel, die die zuvor genannten Substanzen umfassen, können als Metallpulver, sogenanntes schwarzes Edelmetall, insbesondere Platin und/oder Platinlegierungen, eingesetzt werden. Derartige Partikel weisen im allgemeinen eine Größe im Bereich von 5 nm bis 200 nm, vorzugsweise im Bereich von 10 nm bis 100 nm auf.

Darüber hinaus können die Metalle auch auf einem Trägermaterial eingesetzt werden. Vorzugsweise umfasst dieser Träger Kohlenstoff, der insbesondere in Form von Ruß, Graphit oder graphitisierter Ruß, eingesetzt werden kann. Der Metallgehalt dieser geträgerten Partikel, bezogen auf das Gesamtgewicht der Partikel, liegt im allgemeinen im Bereich von 1 bis 80 Gew.-%, vorzugsweise 5 bis 60 Gew.-% und besonders bevorzugt 10 bis 50 Gew.-%, ohne dass hierdurch eine Beschränkung erfolgen soll. Die Partikelgröße des Trägers, insbesondere die Größe der Kohlenstoffpartikel, liegt vorzugsweise im Bereich von 20 bis 100 nm, insbesondere 30 bis 60 nm. Die Größe der sich hierauf befindlichen Metallpartikel liegt vorzugsweise im Bereich von 1 bis 20 nm, insbesondere 1 bis 10 nm und besonders bevorzugt 2 bis 6 nm.

Die Größen der unterschiedlichen Partikel stellen Mittelwerte des Gewichtsmittel dar und können über Transmissionselektronenmikroskopie bestimmt werden.

Die zuvor dargelegten katalytisch aktiven Partikel können im allgemeinen kommerziell erhalten werden.

Des weiteren kann die Katalysatorsuspension übliche Additive enthalten. Hierzu gehören unter anderem Fluorpolymere wie z.B. Polytetrafluorethylen (PTFE), Verdickungsmittel, insbesondere wasserlösliche Polymere wie z.B. Cellulosederivate, Polyvinylalkohol, Polyethylenglykol, und oberflächenaktive Substanzen.

Zu den oberflächenaktiven Substanzen gehören insbesondere ionische Tenside, beispielsweise Fettsäuresalze, insbesondere Natriumlaurat, Kaliumoleat; und Alkylsulfonsäuren, Alkylsulfonsäuresalze, insbesondere Natriumperfluorohexansulfonat, Lithiumperfluorohexansulfonat, Ammoniumperfluorohexansulfonat, Perfluorohexansulfonsäure, Kaliumnonafluorbutansulfonat, sowie nichtionische Tenside, insbesondere ethoxylierte Fettalkohole und Polyethylenglykole.

Des weiteren kann die Katalysator-Suspension bei Raumtemperatur flüssige Bestandteile umfassen. Hierzu gehören unter anderem organische Lösungsmittel, die polar oder unpolar sein können, Phosphorsäure, Polyphosphorsäure und/oder Wasser. Die Katalysatorsuspension enthält vorzugsweise 1 bis 99 Gew.-%, insbesondere 10 bis 80 Gew.-% flüssige Bestandteile.

Zu den polaren, organischen Lösungsmitteln gehören insbesondere Alkohole, wie Ethanol, Propanol und/oder Butanol.

Zu den organischen, unpolaren Lösungsmittel gehören unter anderem bekannte Dünnschichtverdünner, wie Dünnschichtverdünner 8470 der Firma DuPont, der Terpentinöle umfasst.

Besonders bevorzugte Additive stellen Fluorpolymere, insbesondere Tetrafluorethylenpolymere dar. Gemäß einer besonderen Ausführungsform der vorliegenden Erfindung ist das Gewichtsverhältnis von Fluorpolymer zu Katalysatormaterial, umfassend mindestens ein Edelmetall und gegebenenfalls ein oder mehrere Trägermaterialien, größer als 0,1, wobei dieses Verhältnis vorzugsweise im Bereich von 0,2 bis 0,6 liegt.

Die Katalysatorsuspension kann mit üblichen Verfahren auf die Membran gemäß Schritt C) und/oder Schritt D) aufgebracht werden. Je nach Viskosität der Suspension, die auch in Pastenform vorliegen kann, sind verschiedene Methoden bekannt mit denen die Suspension aufgebracht werden kann. Geeignet sind Verfahren zum Beschichten von Folien, Geweben, Textilien und/oder Papieren, insbesondere Sprühverfahren und Druckverfahren, wie beispielsweise Schablonen- und Siebdruckverfahren, Inkjet-Verfahren, Walzenauftrag, insbesondere Rasterwalzen, Schlitzdüsenauftrag und Rakeln. Das jeweilige Verfahren sowie die Viskosität der Katalysatorsuspension ist abhängig von der Härte der Membran.

Die Viskosität kann durch den Feststoffgehalt, insbesondere den Anteil an katalytisch aktiven Partikeln, und den Anteil an Additiven beeinflusst werden. Die einzustellende Viskosität ist abhängig von der Auftragsmethode der Katalysatorsuspension, wobei die optimalen Werte sowie deren Bestimmung dem Fachmann geläufig sind.

Je nach Härte der Membran kann eine Verbesserung der Bindung von Katalysator und Membran durch Erhitzen und/oder Pressen erfolgen. Darüber hinaus steigt die Bindung zwischen Membran und Katalysator durch eine Behandlung gemäß Schritt D) an.

Des weiteren kann das Aufbringen einer Katalysatorschicht gemäß Schritt E) gleichzeitig mit der Behandlung der Membran bis diese selbsttragend ist gemäß Schritt D) erfolgen. Dies kann beispielsweise dadurch erfolgen, dass eine Wasser enthaltende Katalysatorsuspension auf das flächige Gebilde gemäß Schritt C) aufgebracht wird. Hierbei kann die Suspension in Form von feinen Tröpfchen auf das flächige Gebilde gemäß Schritt C) aufgesprüht werden. Neben Wasser kann die Suspension auch weitere Lösungsmittel und/oder Verdünnungsmittel enthalten. Abhängig vom Wassergehalt erfolgt die Härtung der Membran gemäß Schritt D). Dementsprechend kann der Wassergehalt in weiten Bereichen liegen. Vorzugsweise liegt der Wassergehalt im Bereich von 0,1 bis 99, insbesondere 1 bis 95 Gew.-%, bezogen auf die Katalysatorsuspension.

Gemäß einem besonderen Aspekt der vorliegenden Erfindung wird die Katalysatorschicht in Schritt E) mit einem Pulver-Verfahren aufgebracht. Hierbei wird ein Katalysatorpulver eingesetzt, das zusätzliche Additive, die beispielhaft zuvor dargelegt wurden, enthalten kann.

Zum Aufbringen des Katalysatorpulver können unter anderem Sprühverfahren und Siebverfahren eingesetzt werden. Beim Sprühverfahren wird die Pulvermischung mit einer Düse, beispielsweise einer Schlitzdüse auf die Membran gesprüht. Im allgemeinen wird anschließend die mit einer Katalysatorschicht versehene Membran erhitzt, um die Verbindung zwischen Katalysator und Membran zu verbessern. Das Erhitzen kann beispielsweise über eine heiße Walze erfolgen. Derartige Methoden sowie Vorrichtungen zum Auftragen des Pulvers sind unter anderem in DE 195 09 748, DE 195 09 749 und DE 197 57 492 beschrieben.

Beim Siebverfahren wird das Katalysatorpulver mit einem rüttelnden Sieb auf die Membran aufgetragen. Eine Vorrichtung zum Aufbringen eines Katalysatorpulvers auf eine Membran ist in WO 00/26982 beschrieben. Nach dem Auftragen des Katalysatorpulvers kann die Bindung von Katalysator und Membran durch Erhitzen und/ oder den Schritt D) verbessert werden. Hierbei kann die mit mindestens einer Katalysatorschicht versehene Membran auf eine Temperatur im Bereich von 50 bis 200°C, insbesondere 100 bis 180°C erhitzt werden.

Darüber hinaus kann die Katalysatorschicht in Schritt E) durch ein Verfahren aufgebracht werden, bei dem man eine einen Katalysator enthaltende Beschichtung auf einen Träger aufbringt und anschließend die auf dem Träger befindliche Beschichtung enthaltend einen Katalysator auf die gemäß Schritt C) und/oder Schritt D) erhaltene Membran überträgt. Beispielhaft ist ein derartiges Verfahren in WO 92/15121 beschrieben.

Der mit einer Katalysatorbeschichtung versehene Träger kann beispielsweise dadurch hergestellt werden, dass eine zuvor beschriebene Katalysatorsuspension hergestellt wird. Diese Katalysatorsuspension wird anschließend auf eine Trägerfolie, beispielsweise aus Polytetrafluorethylen, aufgetragen. Nach dem Auftragen der Suspension werden die flüchtigen Bestandteile entfernt.

Das Übertragen der Beschichtung enthaltend einen Katalysator kann unter anderem durch Heißpressen erfolgen. Hierzu wird der Verbund umfassend eine Katalysatorschicht und eine Membran sowie eine Trägerfolie auf eine Temperatur im Bereich von 50°C bis 200°C erhitzt und mit einem Druck von 0,1 bis 5 MPa verpresst. Im allgemeinen genügen einige Sekunden, um die Katalysatorschicht mit der Membran zu verbinden. Vorzugsweise liegt diese Zeit im Bereich von 1 Sekunde bis 5 Minuten, insbesondere 5 Sekunden bis 1 Minute. Gemäß einer besonderen Ausführungsform der vorliegenden Erfindung weist die Katalysatorschicht eine Dicke im Bereich von 1 bis 1000 µm, insbesondere von 5 bis 500, vorzugsweise von 10 bis 300 µm auf. Dieser Wert stellt einen Mittelwert dar, der durch Messung der Schichtdicke im Querschnitt von Aufnahmen bestimmt werden kann, die mit einem Rasterelektronenmikroskop (REM) erhalten werden können.

Nach der vorliegenden Erfindung umfasst die mit mindestens einer Katalysatorschicht versehene Membran 0,1 bis 10,0 mg/cm², vorzugsweise 0,3 bis 6,0 mg/cm² und besonders bevorzugt 0,3 bis 3,0 mg/cm². Diese Werte können durch Elementaranalyse einer flächigen Probe bestimmt werden.

Im Anschluss an die Behandlung gemäß Schritt D) und/oder Schritt E) kann die Membran durch Einwirken von Hitze in Gegenwart von Sauerstoff noch vernetzt werden. Diese Härtung der Membran verbessert die Eigenschaften der Membran zusätzlich. Hierzu kann die Membran auf eine Temperatur von mindestens 150°C, vorzugsweise mindestens 200°C und besonders bevorzugt mindestens 250°C erwärmt werden. Die Sauerstoffkonzentration liegt bei diesem Verfahrensschritt üblich im Bereich von 5 bis 50 Vol.-%, vorzugsweise 10 bis 40 Vol.-%, ohne dass hierdurch eine Beschränkung erfolgen soll.

Die Vernetzung kann auch durch Einwirken von IR bzw. NIR (IR = InfraRot, d. h. Licht mit einer Wellenlänge von mehr als 700 nm; NIR = Nahes IR, d. h. Licht mit einer Wellenlänge im Bereich von ca. 700 bis 2000 nm bzw. einer Energie im Bereich von ca. 0.6 bis 1.75 eV) erfolgen. Eine weitere Methode ist die Bestrahlung mit ß-Strahlen. Die Strahlungsdosis beträgt hierbei zwischen 5 und 200 kGy.

Je nach gewünschtem Vernetzungsgrad kann die Dauer der Vernetzungsreaktion in einem weiten Bereich liegen. Im allgemeinen liegt diese Reaktionszeit im Bereich von 1 Sekunde bis 10 Stunden, vorzugsweise 1 Minute bis 1 Stunde, ohne dass hierdurch eine Beschränkung erfolgen soll.

Die erfindungsgemäße Polymermembran weist verbesserte Materialeigenschaften gegenüber den bisher bekannten dotierten Polymermembranen auf. Insbesondere zeigen sie im Vergleich mit bekannten dotierten Polymermembranen bessere Leistungen. Diese begründet sich insbesondere durch eine verbesserte Protonenleitfähigkeit. Diese beträgt bei Temperaturen von 120°C mindestens 0,1 S/cm, vorzugsweise mindestens 0,11 S/cm, insbesondere mindestens 0,12 S/cm.
Falls die erfindungsgemäßen Membranen Polymere mit Sulfonsäuregruppen umfassen, zeigen die Membranen auch bei einer Temperatur von 70°C eine hohe Leitfähigkeit. Die Leitfähigkeit ist unter anderem abhängig vom Sulfonsäuregruppengehalt der Membran. Je höher dieser Anteil, desto besser die Leitfähigkeit bei tiefen Temperaturen. Hierbei kann eine erfindungsgemäße Membran bei geringen Temperaturen befeuchtet werden. Hierzu kann beispielsweise die als Energiequelle eingesetzte Verbindung, beispielsweise Wasserstoff, mit einem Anteil an Wasser versehen werden. In vielen Fällen genügt jedoch auch das durch die Reaktion gebildete Wasser, um eine Befeuchtung zu erzielen.

Die spezifische Leitfähigkeit wird mittels Impedanzspektroskopie in einer 4-Pol-Anordnung im potentiostatischen Modus und unter Verwendung von Platinelektroden (Draht, 0,25 mm Durchmesser) gemessen. Der Abstand zwischen den stromabnehmenden Elektroden beträgt 2 cm. Das erhaltene Spektrum wird mit einem einfachen Modell bestehend aus einer parallelen Anordnung eines ohm schen Widerstandes und eines Kapazitators ausgewertet. Der Probenquerschnitt der phosphorsäuredotierten Membran wird unmittelbar vor der Probenmontage gemessen. Zur Messung der Temperaturabhängigkeit wird die Messzelle in einem Ofen auf die gewünschte Temperatur gebracht und über eine in unmittelbarer Probennähe positioniertes Pt-100 Thermoelement geregelt. Nach Erreichen der Temperatur wird die Probe vor dem Start der Messung 10 Minuten auf dieser Temperatur gehalten.

Zu möglichen Einsatzgebieten der erfindungsgemäßen Polymermembranen gehören unter anderem die Verwendung in Brennstoffzellen, bei der Elektrolyse, in Kondensatoren und in Batteriesystemen.

Die vorliegende Erfindung betrifft auch eine Membran-Elektroden-Einheit, die mindestens eine erfindungsgemäße Polymermembran aufweist. Für weitere Informationen über Membran-Elektroden-Einheiten wird auf die Fachliteratur, insbesondere auf die Patente US-A-4,191,618, US-A-4,212,714 und US-A-4,333,805 verwiesen.

Zur Herstellung einer Membran-Elektroden-Einheit kann die erfindungsgemäße Membran mit einer Gasdiffusionslage verbunden werden. Falls die Membran beidseitig mit einer Katalysatorschicht versehen ist, muß die Gasdiffusionslage vor dem Verpressen keinen Katalysator aufweisen. Allerdings können auch mit einer katalytisch aktiven Schicht versehene Gasdiffusionslagen eingesetzt werden. Die Gasdiffusionslage zeigt im allgemeinen eine Elektronenleitfähigkeit. Üblich werden hierfür flächige, elektrisch leitende und säureresistente Gebilde eingesetzt. Zu diesen gehören beispielsweise Kohlefaser-Papiere, graphitisierte Kohlefaser-Papiere, Kohlefasergewebe, graphitisierte Kohlefasergewebe und/oder flächige Gebilde, die durch Zugabe von Ruß leitfähig gemacht wurden.

Eine erfindungsgemäße Membran-Elektroden-Einheit zeigt eine überraschend hohe Leistungsdichte. Gemäß einer besonderen Ausführungsform leisten bevorzugte Membran-Elektroden-Einheiten eine Stromdichte von mindestens 0,1 A/cm², bevorzugt 0,2 A/cm², besonders bevorzugt 0,4 A/cm². Diese Stromdichte wird im Betrieb mit reinem Wasserstoff an der Anode und Luft (ca. 20 Vol.-% Sauerstoff, ca. 80 Vol.-% Stickstoff) an der Kathode bei Normaldruck (absolut 1013 mbar, mit offenem Zellausgang) und 0,6V Zellspannung gemessen. Hierbei können besonders hohe Temperaturen im Bereich von 150-200°C, vorzugsweise 160-180°C, insbesondere von 170°C eingesetzt werden.

Die zuvor genannten Leistungsdichten können auch bei geringer Stöchiometrie der Brenngase an beiden Seiten erzielt werden. Gemäß einem besonderen Aspekt der vorliegenden Erfindung ist die Stöchiometrie kleiner oder gleich 2, vorzugsweise kleiner oder gleich 1,5 ganz besonders bevorzugt kleiner oder gleich 1,2.

Gemäß einer besonderen Ausführungsform der vorliegenden Erfindung weist die Katalysatorschicht einen geringen Edelmetallgehalt auf. Der Edelmetall-Gehalt einer bevorzugten Katalysatorschicht, die von einer erfindungsgemäßen Membran umfasst wird, beträgt vorzugsweise höchstens 2 mg/cm², insbesondere höchstens 1 mg/cm², ganz besonders bevorzugt höchstens 0,5 mg/cm². Gemäß einem besonderen Aspekt der vorliegenden Erfindung weist eine Seite einer Membran einen höheren Metallgehalt auf als die gegenüberliegende Seite der Membran. Vorzugsweise ist der Metallgehalt der einen Seite mindestens doppelt so hoch wie der Metallgehalt der gegenüberliegenden Seite.

In einer Variante der vorliegenden Erfindung kann die Membranbildung anstelle auf einem Träger auch direkt auf der Elektrode erfolgen. Der Vollständigkeit halber sei festgehalten, dass sämtliche bevorzugten Ausführungsformen einer selbsttragenden Membran entsprechend auch für eine unmittelbar auf die Elektrode aufgebrachte Membran gelten.

Gemäß einem besonderen Aspekt der vorliegenden Erfindung hat die Beschichtung eine Dicke zwischen 2 und 3000 µm, vorzugsweise zwischen 2 und 2000 µm, insbesondere zwischen 3 und 1500 µm, besonders bevorzugt 5 bis 500 µm und ganz besonders bevorzugt zwischen 10 bis 200µm, ohne dass hierdurch eine Beschränkung erfolgen soll.

Die Behandlung gemäß Schritt D) führt zu einer Härtung der Beschichtung. Hierbei erfolgt die Behandlung solange, bis die Beschichtung eine genügende Härte aufweist, um zu einer Membran-Elektroden-Einheit verpresst werden zu können. Eine genügende Härte ist gegeben, wenn eine entsprechend behandelte Membran selbsttragend ist. In vielen Fällen genügt jedoch eine geringere Härte. Die gemäß DIN 50539 (Mikrohärtemessung) bestimmte Härte beträgt im allgemeinen mindestens 1 mN/mm², bevorzugt mindestens 5 mN/mm² und ganz besonders bevorzugt mindestens 15 mN/mm², ohne dass hierdurch eine Beschränkung erfolgen soll.

Eine derartig beschichtete Elektrode kann in einer Membran-Elektroden-Einheit, die gegebenenfalls mindestens eine erfindungsgemäße Polymermembran aufweist, eingebaut werden.

## Patentansprüche

1. Mit einer Katalysatorschicht beschichtete protonenleitende Polymermembran enthaltend Polyazole erhältlich durch ein Verfahren umfassend die Schritte
A) Herstellung einer Mischung umfassend
Polyphosphorsäure,
mindestens ein Polyazol (Polymer A) und/oder mindestens ein oder mehrere Verbindungen, die unter Einwirkung von Wärme gemäß Schritt B) zur Bildung von Polyazolen geeignet sind,
B) Erwärmen der Mischung erhältlich gemäß Schritt A) unter Inertgas auf Temperaturen von bis zu 400°C,
C) Aufbringen einer Schicht unter Verwendung der Mischung gemäß Schritt A) und/oder B) auf einem Träger,
D) Behandlung der in Schritt C) gebildeten Membran in Gegenwart von Feuchtigkeit so dass eine partielle Hydrolyse der anwesenden Polyphosphorsäure erfolgt bis die Membran selbsttragend ist,
E) Aufbringen mindestens einer Katalysatorschicht auf die in Schritt C) und/oder in Schritt D) gebildete Membran,
**dadurch gekennzeichnet, dass** die Katalysatorschicht 0,1 bis 10 g/m² einer katalytisch aktiven Substanz umfasst.

2. Membran gemäß Anspruch 1, **dadurch gekennzeichnet, dass** in Schritt C) ein Träger verwendet wird, der mit einer einen Katalysator enthaltenden Beschichtung versehen ist, um die in Schritt C) gebildete Schicht mit einer Katalysatorschicht zu versehen.

3. Membran gemäß Anspruch 1 oder 2, **dadurch gekennzeichnet, dass** die Schritte D) und E) gleichzeitig erfolgen, wobei die in Schritt C) erhaltene Membran in einem Schritt behandelt wird bis diese selbsttragend ist und mit einer Katalysatorschicht versehen wird.

4. Membran gemäß einem oder mehreren der vorhergehenden Ansprüche, **dadurch gekennzeichnet, dass** in Schritt E) die Katalysatorschicht mit einem Pulver-Verfahren aufgebracht wird.

5. Membran gemäß einem oder mehreren der vorhergehenden Ansprüche, **dadurch gekennzeichnet, dass** in Schritt E) die Katalysatorschicht durch ein Verfahren aufgebracht wird, bei dem eine Katalysator-Suspension eingesetzt wird.

6. Membran gemäß Anspruch 5, **dadurch gekennzeichnet, dass** die Katalysator-Suspension mindestens ein organisches, unpolares Lösungsmittel enthält.

7. Membran gemäß Anspruch 5 oder 6, **dadurch gekennzeichnet, dass** die Katalysator-Suspension Phosphorsäure und/oder Polyphosphorsäure enthält.

8. Membran gemäß einem oder mehreren der vorhergehenden Ansprüche, **dadurch gekennzeichnet, dass** in Schritt E) die Katalysatorschicht durch ein Verfahren aufgebracht wird, bei dem man eine einen Katalysator enthaltende Beschichtung auf einen Träger aufbringt und anschließend die auf dem Träger befindliche Beschichtung enthaltend einen Katalysator auf die gemäß Schritt C) und/oder Schritt D) erhaltene Membran überträgt.

9. Membran gemäß Anspruch 8, **dadurch gekennzeichnet, dass** das Übertragen der Beschichtung enthaltend einen Katalysator durch Heißpressen erfolgt.

10. Membran gemäß einem der vorhergehenden Ansprüche, **dadurch gekennzeichnet, dass** die in Schritt A) hergestellte Mischung Verbindungen umfasst, die unter Einwirkung von Wärme gemäß Schritt B) zur Bildung von Polyazolen geeignet sind, wobei diese Verbindungen ein oder mehreren aromatische und/oder heteroaromatische Tetra-Amino-Verbindungen und eine oder mehrere aromatische und/oder heteroaromatische Carbonsäuren oder deren Derivate, die mindestens zwei Säuregruppen pro Carbonsäure-Monomer umfassen, und/oder eine oder mehrere aromatischen und/oder heteroaromatischen Diaminocarbonsäuren umfassen.

11. Membran gemäß einem der Ansprüche 1 bis 9, **dadurch gekennzeichnet, dass** die in Schritt A) hergestellte Mischung Verbindungen umfasst, die unter Einwirkung von Wärme gemäß Schritt B) zur Bildung von Polyazolen geeignet sind, wobei diese Verbindungen durch Umsetzung von einem oder mehreren aromatischen und/oder heteroaromatischen Tetra-Amino-Verbindungen mit einer oder mehreren aromatischen und/oder heteroaromatischen Carbonsäuren bzw. deren Derivate, die mindestens zwei Säuregruppen pro Carbonsäure-Monomer enthalten, oder von einer oder mehreren aromatischen und/oder heteroaromatischen Diaminocarbonsäuren in der Schmelze bei Temperaturen von bis zu 400°C erhältlich sind.

12. Membran gemäß Anspruch 10 oder 11, **dadurch gekennzeichnet, dass** die zur Bildung von Polyazolen geeigneten Verbindungen als aromatische und/oder heteroaromatische Tetra-Aminoverbindung Verbindungen umfassen, die ausgewählt sind aus der Gruppe bestehend aus 3,3',4,4'-Tetraaminobiphenyl, 2,3,5,6-Tetraaminopyridin und/oder 1,2,4,5-Tetraaminobenzol.

13. Membran gemäß Anspruch 10, 11 oder 12, **dadurch gekennzeichnet, dass** die zur Bildung von Polyazolen geeigneten Verbindungen als aromatische und/oder heteroaromatische Carbonsäuren oder deren Derivate, die mindestens zwei Säuregruppen pro Carbonsäure-Monomer enthalten, Verbindungen umfassen die ausgewählt sind aus der Gruppe bestehend aus Isophthalsäure, Terephthalsäure, Phthalsäure, 5-Hydroxyisophthalsäure, 4-Hydroxyisophthalsäure, 2-Hydroxyterephthalsäure, 5-Aminoisophthalsäure, 5-N,N-Dimethylaminoisophthalsäure, 5-N,N-Diethylaminoisophthalsäure, 2,5-Dihydroxyterephthalsäure, 2,5-Dihydroxyisophthalsäure, 2,3-Dihydroxyisophthalsäure, 2,3-Dihydroxyphthalsäure, 2,4-Dihydroxyphthalsäure. 3,4-Dihydroxyphthalsäure, 3-Fluorophthalsäure, 5-Fluoroisophthalsäure, 2-Fluoroterphthalsäure, Tetrafluorophthalsäure, Tetrafluoroisophthalsäure, Tetrafluoroterephthalsäure, 1,4-Naphthalindicarbonsäure, 1,5-Naphthalindicarbonsäure, 2,6-Naphthalindicarbonsäure, 2,7-Naphthalindicarbonsäure, Diphensäure, 1,8-dihydroxynaphthalin-3,6-dicarbonsäure, Diphenylether-4,4'-dicarbonsäure, Benzophenon-4,4'-dicarbonsäure, Diphenylsulfon-4,4'-dicarbonsäure, Biphenyl-4,4'-dicarbonsäure, 4-Trifluoromethylphthalsäure, 2,2-Bis(4-carboxyphenyl)hexafluoropropan, 4,4'-Stilbendicarbonsäure, 4-Carboxyzimtsäure, bzw. deren C1-C20-Alkyl-Ester oder C5-C12-Aryl-Ester, oder deren Säureanhydride oder deren Säurechloride.

14. Membran gemäß Anspruch 10, 11, 12 oder 13, **dadurch gekennzeichnet, dass** die zur Bildung von Polyazolen geeigneten Verbindungen aromatische Tricarbonsäuren, deren C1-C20-Alkyl-Ester oder C5-C12-Aryl-Ester oder deren Säureanhydride oder deren Säurehalogenide oder Tetracarbonsäuren, deren C1-C20-Alkyl-Ester oder C5-C12-Aryl-Ester oder deren Säureanhydride oder deren Säurehalogenide umfassen.

15. Membran gemäß Anspruch 14, **dadurch gekennzeichnet, dass** die aromatische Tricarbonsäuren Verbindungen umfassen, die ausgewählt sind aus der Gruppe bestehend aus 1,3,5-Benzoltricarbonsäure (trimesic acid); 2,4,5-Benzoltricarbonsäure (trimellitic acid); (2-Carboxyphenyl)iminodiessigsäure, 3,5,3'-Biphenyltricarbonsäure; 3,5,4'-Biphenyltricarbonsäure 2,4,6-Pyridintricarbonsäure, Benzol-1,2,4,5-tetracarbonsäuren; Naphthalin-1,4,5,8-tetracarbonsäuren, 3,5,3',5'-Biphenyltetracarbonsäuren, Benzophenontetracarbonsäure, 3,3',4,4'-Biphenyltetracarbonsäure, 2,2',3,3'-Biphenyltetracarbonsäure, 1,2,5,6-Naphthalintetracarbonsäure und/oder 1,4,5,8-Naphthalintetracarbonsäure.

16. Membran gemäß Anspruch 14 oder 15, **dadurch gekennzeichnet, dass** der Gehalt an Tricarbonsäure und/oder Tetracarbonsäuren zwischen 0 und 30 Mol-%, vorzugsweise 0,1 und 20 Mol-%, insbesondere 0,5 und 10 Mol-%, bezogen auf eingesetzte Dicarbonsäure, beträgt.

17. Membran gemäß einem oder mehreren der Ansprüche 10 bis 16, **dadurch gekennzeichnet, dass** die zur Bildung von Polyazolen geeigneten Verbindungen heteroaromatische Dicarbonsäuren, Tricarbonsäuren und/oder Tetracarbonsäuren umfassen, welche mindestens ein Stickstoff, Sauerstoff, Schwefel oder Phosphoratom im Aromaten enthalten.

18. Membran gemäß Anspruch 17, **dadurch gekennzeichnet, dass** Pyridin-2,5-dicarbonsäure, Pyridin-3,5-dicarbonsäure, Pyridin-2,6-dicarbonsäure, Pyridin-2,4-dicarbonsäure, 4-Phenyl-2,5-pyridindicarbonsäure, 3,5-Pyrazoldicarbonsäure, 2,6 -Pyrimidindicarbonsäure,2,5-Pyrazindicarbonsäure, 2,4,6-Pyridintricarbonsäure, Benzimidazol-5,6-dicarbonsäure, sowie deren C1-C20-Alkyl-Ester oder C5-C12-Aryl-Ester, oder deren Säureanhydride oder deren Säurechloride eingesetzt werden.

19. Membran gemäß Anspruch 10 oder 11, **dadurch gekennzeichnet, dass** die zur Bildung von Polyazolen geeigneten Verbindungen Diaminobenzoesäure und/oder deren Mono- und Dihydrochloridderivate umfassen.

20. Membran gemäß einem oder mehreren der vorhergehenden Ansprüche, **dadurch gekennzeichnet, dass** die Erwärmung gemäß Schritt B) nach der Bildung eines flächigen Gebildes gemäß Schritt C) erfolgt.

21. Membran gemäß Anspruch 1, **dadurch gekennzeichnet, dass** die Behandlung gemäß Schritt D) bei Temperaturen im Bereich von 0°C und 150°C in Gegenwart von Feuchtigkeit erfolgt.

22. Membran gemäß einem oder mehreren der vorhergehenden Ansprüche, **dadurch gekennzeichnet, dass** die Behandlung der Membran in Schritt D) zwischen 10 Sekunden und 300 Stunden beträgt.

23. Membran gemäß einem oder mehreren der vorhergehenden Ansprüche, **dadurch gekennzeichnet, dass** die nach Schritt D) und/oder Schritt E) gebildete Membran durch Einwirkung von Sauerstoff vernetzt wird.

24. Membran gemäß einem oder mehreren der vorhergehenden Ansprüche, **dadurch gekennzeichnet, dass** in Schritt C) eine Schicht mit einer Dicke von 20 und 4000 µm erzeugt wird.

25. Membran gemäß einem oder mehreren der vorhergehenden Ansprüche, **dadurch gekennzeichnet, dass** die nach Schritt D) gebildete Membran eine Dicke zwischen 15 und 3000 µm hat.

26. Membran gemäß einem oder mehreren der vorhergehenden Ansprüche, **dadurch gekennzeichnet, dass** die Katalysatorschicht eine Dicke im Bereich von 0,1 bis 50 µm aufweist.

27. Membran gemäß einem oder mehreren der vorhergehenden Ansprüche, **dadurch gekennzeichnet, dass** die Katalysatorschicht katalytisch aktive Partikel umfasst, die eine Größe im Bereich von 0,1 bis 10 µm aufweisen.

28. Membran gemäß Anspruch 27, **dadurch gekennzeichnet, dass** die katalytisch aktive Substanz Partikel umfasst, die Platin, Palladium, Gold, Rhodium, Iridium und/oder Ruthenium enthalten.

29. Membran gemäß Anspruch 1, **dadurch gekennzeichnet, dass** die katalytisch aktiven Partikel Kohlenstoff enthalten.

30. Membran-Elektroden-Einheit enthaltend mindestens eine Elektrode und mindestens eine Membran gemäß einem oder mehreren der Ansprüche 1 bis 29.

31. Brennstoffzelle enthaltend eine oder mehrere Membran-Elektroden-Einheiten gemäß Anspruch 30.

## Claims

1. A proton-conducting polymer membrane coated with a catalyst layer containing polyazoles and coated with a catalyst layer, which membrane can be obtained by a method comprising the steps of
A) preparation of a mixture comprising
polyphosphoric acid,
at least one polyazole (polymer A) and/or one or more compounds which are suitable for forming polyazoles under the action of heat according to step B),
B) heating of the mixture obtainable according to step A) under inert gas to temperatures of up to 400°C,
C) application of a layer using the mixture according to step A) and/or B) to a support,
D) Treatment of the membrane formed in step C) in the presence of moisture so that a partial hydrolysis of the present polyphosphoric acid occurs until the membrane is self-supporting,
E) application of at least one catalyst layer to the membrane formed in step C) and/or in step D),
**characterized in that** the catalyst layer comprises from 0.1 to 10 g/m² of a catalytically active substance.

2. The membrane according to claim 1, **characterized in that**, in step C), a support is used that is provided with a catalyst-containing coating in order to provide the layer formed in step C) with a catalyst layer.

3. The membrane according to claim 1 or 2, **characterized in that** the steps D) and E) are carried out simultaneously, wherein the membrane obtained in step C) is treated until it is self-supporting and provided with a catalyst layer in one step.

4. The membrane according to one or more of the preceding claims, **characterized in that**, in step E), the catalyst layer is applied by means of a powder process.

5. The membrane according to one or more of the preceding claims, **characterized in that**, in step E), the catalyst layer is applied by means of a process in which a catalyst suspension is used.

6. The membrane according to claim 5, **characterized in that** the catalyst suspension contains at least one organic, non-polar solvent.

7. The membrane according to claim 5 or 6, **characterized in that** the catalyst suspension contains phosphoric acid and/or polyphosphoric acid.

8. The membrane according to one or more of the preceding claims, **characterized in that**, in step E), the catalyst layer is applied by means of a process in which a catalyst-containing coating is applied to a support and the catalyst-containing coating present on the support is subsequently transferred to the membrane obtained according to step C) and/or step D).

9. The membrane according to claim 8, **characterized in that** the transfer of the catalyst-containing coating is effected by hot pressing.

10. The membrane according to any one of the preceding claims, **characterized in that** the mixture prepared in step A) comprises compounds which are suitable for forming polyazoles under the action of heat according to step B), with these compounds comprising one or more aromatic and/or heteroaromatic tetraamino compounds and one or more aromatic and/or heteroaromatic carboxylic acids or derivatives thereof which have at least two acid groups per carboxylic acid monomer, and/or one or more aromatic and/or heteroaromatic diaminocarboxylic acids.

11. The membrane according to any one of claims 1 to 9, **characterized in that** the mixture prepared in step A) comprises compounds, which are suitable for forming polyazoles under the action of heat according to step B), wherein these compounds can be obtained by reaction of one or more aromatic and/or heteroaromatic tetraamino compounds with one or more aromatic and/or heteroaromatic carboxylic acids or derivatives thereof, which contain at least two acid groups per carboxylic acid monomer or of one or more aromatic and/or heteroaromatic diaminocarboxylic acids in the melt at temperatures of up to 400°C.

12. The membrane according to claim 10 or 11, **characterized in that** the aromatic and/or heteroaromatic tetraamino compounds used as compounds suitable for forming polyazoles comprise compounds selected from the group consisting of 3,3',4,4'-tetraaminobiphenyl, 2,3,5,6-tetraaminopyridine and 1,2,4,5-tetraaminobenzene.

13. The membrane according to claim 10, 11 or 12, **characterized in that** the aromatic and/or heteroaromatic carboxylic acids or derivatives thereof containing at least two acid groups per carboxylic acid monomer which are used as compounds suitable for forming polyazoles comprise compounds selected from the group consisting of isophthalic acid, terephthalic acid, phthalic acid, 5-hydroxyisophthalic acid, 4-hydroxyisophthalic acid, 2-hydroxyterephthalic acid, 5-aminoisophthalic acid, 5-N,N-dimethylaminoisophthalic acid, 5-N,N-diethylaminoisophthalic acid, 2,5-dihydroxyterephthalic acid, 2,5-dihydroxyisophthalic acid, 2,3-dihydroxyphthalic acid, 2,3-dihydroxyphtalic acid, 2,4-dihydroxyphthalic acid, 3,4-dihydroxyphthalic acid, 3-fluorophthalic acid, 5-fluoroisophthalic acid, 2-fluoroterephthalic acid, tetrafluorophthalic acid, tetrafluoroisophthalic acid, tetrafluoroterephthalic acid, 1,4-naphthalenedicarboxylic acid, 1,5-naphthalenedicarboxylic acid, 2,6-naphthalenedicarboxylic acid, 2,7-naphthalenedicarboxylic acid, diphenic acid, 1,8-dihydroxynaphthalene-3,6-dicarboxylic acid, diphenylether-4,4'-dicarboxylic acid, benzophenone-4,4'-dicarboxylic acid, diphenylsulphone-4,4'-dicarboxylic acid, biphenyl-4,4'-dicarboxylic acid, 4-trifluoromethylphthalic acid, 2,2-bis(4-carboxyphenyl)hexafluoropropane, 4,4'-stilbenedicarboxylic acid, 4-carboxycinnamic acid, or their C1-C20-alkyl esters or C5-C12-aryl esters, or their acid anhydrides or their acid chlorides.

14. The membrane according to claim 10, 11, 12 or 13, **characterized in that** the compounds suitable for forming polyazoles comprise aromatic tricarboxylic acids, their C1-C20-alkyl esters or C5-C12-aryl esters or their acid anhydrides or their acid halides or tetracarboxylic acids, their C1-C20-alkyl esters or C5-C12-aryl esters or their acid anhydrides or their acid halides.

15. The membrane according to claim 14, **characterized in that** the aromatic tricarboxylic acids comprise compounds which are selected from the group consisting of 1,3,5-benzenetricarboxylic acid (trimesic acid); 2,4,5-benzenetricarboxylic acid (trimellitic acid); (2-carboxyphenyl)iminodiacetic acid, 3,5,3'-biphenyltricarboxylic acid; 3,5,4'-biphenyltricarboxylic acid; 2,4,6-pyridinetricarboxylic acid, benzene-1 ,2,4,5-tetracarboxylic acids; naphthalene-1,4,5,8-tetracarboxylic acids, 3,5,3',5'-biphenyltetracarboxylic acids, benzophenonetetracarboxylic acid, 3,3',4,4'-biphenyltetracarboxylic acid, 2,2',3,3'-biphenyltetracarboxylic acid, 1,2,5,6-naphthalenetetracarboxylic acid and/or 1,4,5,8-naphthalenetetracarboxylic acid.

16. The membrane according to claim 14 or 15, **characterized in that** the content of tricarboxylic acids and/or tetracarboxylic acids is in the range from 0 to 30 mol%, preferably from 0.1 to 20 mol%, in particular from 0.5 to 10 mol%, with reference to the dicarboxylic acid used.

17. The membrane electrode unit according to one or more of claims 10 to 16, **characterized in that** the compounds suitable for forming polyazoles comprise heteroaromatic dicarboxylic acids, tricarboxylic acids and/or tetracarboxylic acids, which contain at least one nitrogen, oxygen, sulphur or phosphorus atom in the aromatic group.

18. The membrane according to claim 17, **characterized in that** pyridine-2,5-dicarboxylic acid, pyridine-3,5-dicarboxylic acid, pyridine-2,6-dicarboxylic acid, pyridine-2,4-dicarboxylic acid, 4-phenyl-2,5-pyridinedicarboxylic acid, 3,5-pyrazoledicarboxylic acid, 2,6-pyrimidinedicarboxylic acid, 2,5-pyrazinedicarboxylic acid, 2,4,6-pyridinetricarboxylic acid, benzimidazole-5,6-dicarboxylic acid and their C1-C20 alkyl esters or C5-C12 aryl esters or their acid anhydrides or their acid chlorides are used.

19. The membrane according to claim 10 or 11, **characterized in that** the compounds suitable for forming polyazoles comprise diaminobenzoic acid and/or its monohydrochloride and dihydrochloride derivatives.

20. The membrane according to one or more of the preceding claims, **characterized in that** the heating according to step B) is carried out after formation of a planar structure according to step C).

21. The membrane according to claim 1, **characterized in that** the treatment according to step D) is carried out at temperatures in the range from 0°C to 150°C in the presence of moisture.

22. The membrane according to one or more of the preceding claims, **characterized in that** the duration of treatment of the membrane in step D) is in the range from 10 seconds to 300 hours.

23. The membrane according to one or more of the preceding claims, **characterized in that** the membrane formed after step D) and/or step E) is cross-linked by action of oxygen.

24. The membrane according to one or more of the preceding claims, **characterized in that** a layer having a thickness of from 20 to 4000 µm is produced in step C).

25. The membrane according to one or more of the preceding claims, **characterized in that** the membrane formed after step D) has a thickness in the range from 15 to 3000 µm.

26. The membrane according to one or more of the preceding claims, **characterized in that** the catalyst layer has a thickness in the range from 0.1 to 50 µm.

27. The membrane according to one or more of the preceding claims, **characterized in that** the catalyst layer comprises catalytically active particles, which have a size in the range from 0.1 to 10 µm.

28. The membrane according to claim 27, **characterized in that** the catalytically active substance comprises particles, which contain platinum, palladium, gold, rhodium, iridium and/or ruthenium.

29. The membrane according to claim 1, **characterized in that** the catalytically active particles contain carbon.

30. A membrane electrode unit containing at least one electrode and at least one membrane according to one or more of claims 1 to 29.

31. A fuel cell containing one or more membrane electrode assemblies according to Claim 30.

## Revendications

1. Membrane de polymère conductrice de proton recouverte d'une couche catalytique obtenue à l'aide d'un procédé comprenant les étapes
A) Production d'un mélange comprenant
de l'acide polyphosphorique, au moins un polyazole (polymère A) ou au moins un ou plusieurs composés qui se prêtent à la formation de polyazoles lorsque soumis à la chaleur selon l'étape B),
B) Réchauffement de la solution obtenue selon l'étape A) dans un gaz inerte à des températures pouvant atteindre 400 °C,
C) Apposition d'une couche du mélange obtenu à l'étape A) ou B) sur un support,
D) Traitement de la membrane formée à l'étape C) en présence d'humidité de façon à ce que se produite une hydrolyse partielle de l'acide polyphosphorique présent jusqu'à ce que la membrane soit autoporteuse,
E) Apposition d'au moins une couche catalytique sur la membrane formée en C) ou en D),
**caractérisée en ce que** la couche catalytique comprend 0,1 à 10 g/m² d'une substance catalytiquement active.

2. Membrane selon la revendication 1, **caractérisée en ce qu'**à l'étape C) est utilisé un support muni d'une couche contenant un catalyseur afin de pouvoir la couche formée à l'étape c) d'une couche catalytique.

3. Membrane selon les revendications 1 ou 2, **caractérisée en ce que** les étapes D) et E) sont exécutées en même temps, la membrane obtenue en C) étant traitée en une étape jusqu'à ce que celle-ci soit autoporteuse et pourvue d'une couche catalytique.

4. Membrane selon une ou plusieurs des revendications précédentes, **caractérisée en ce qu'**à l'étape E), la couche catalytique est posée au moyen d'un procédé de pulvérisation.

5. Membrane selon une ou plusieurs des revendications précédentes, **caractérisée en ce qu'**à l'étape E), la couche catalytique est posée au moyen d'un procédé au cours duquel est fournie une suspension de catalyseur.

6. Membrane selon la revendication 5, **caractérisée en ce que** la suspension du catalyseur contient au moins un solvant organique et apolaire.

7. Membrane selon les revendications 5 ou 6, **caractérisé en ce que** la suspension du catalyseur contient de l'acide phosphorique ou polyphosphorique.

8. Membrane selon une ou plusieurs des revendications précédentes, **caractérisée en ce qu'**à l'étape E), la couche de catalyseur est posée au moyen d'un procédé au cours duquel on pose une couche contenant un catalyseur sur un support, puis en transférant la couche située sur le support et contenant un catalyseur sur la membrane obtenue à l'étape C) ou D).

9. Membrane selon la revendication 8, **caractérisé en ce que** le transfert de la couche contenant un catalyseur est effectué par pressage à chaud.

10. Membrane selon une des revendications précédentes, **caractérisée en ce que** le mélange fabriqué à l'étape A) comprend des composés qui se prêtent à la formation de polyazoles sous l'influence de la chaleur d'après l'étape B), ces composés comprenant un ou plusieurs composés de tétramine aromatiques ou hétéroaromatiques ; un ou plusieurs acides carboxyliques aromatiques ou hétéroaromatiques ou leurs dérivés, qui contiennent au moins deux groupes d'acide par monomère d'acide carboxylique ; ou un ou plusieurs acides diaminocarboxyliques.

11. Membrane selon une des revendications 1 à 9, **caractérisée en ce que** le mélange fabriqué à l'étape A) comprend des composés qui se prêtent à la formation de polyazoles sous l'influence de la chaleur d'après l'étape B), ces composés pouvant être obtenus en remplaçant un ou plusieurs composés de tétramine aromatiques ou hétéroaromatiques par un ou plusieurs acides carboxyliques aromatiques ou hétéroaromatiques ou leurs dérivés, qui contiennent au moins deux groupes d'acide par monomère d'acide carboxylique ; ou un ou plusieurs acides diaminocarboxyliques aromatiques ou hétéroaromatiques dans la masse fondue à des températures pouvant atteindre 400 °C.

12. Membrane selon les revendications 10 ou 11, **caractérisée en ce que** les composés qui se prêtent à la formation de polyazoles comprennent, en tant que composés de tétramine aromatiques ou hétéroaromatiques, des composés sélectionnés parmi le groupe composé de biphényl-3,3',4,4'-tétramine, pyridine-2,3,5,6-tétramine ou benzène-1,2,4,5-tétramine.

13. Membrane selon la revendication 10, 11 ou 12, **caractérisée en ce que** les composés qui se prêtent à la formation de polyazoles contiennent, en tant qu'acides carboxyliques aromatiques ou hétéroaromatiques ou leurs dérivés, qui contiennent au moins deux groupes d'acides par monomère d'acide carboxylique, des composés sélectionnés parmi le groupe composé d'acide isophtalique, acide téréphtalique, acide phtalique, 5-acide hydroxyisophtalique, 4-acide hydroxyisophtalique, 2-acide hydroxytéréphtalique, 5-acide aminoisophtalique, 5-N,N-acide diméthylaminoisophtalique, 5-N,N- acide diéthylaminoisophtalique, 2,5-acide dihydroxytéréphtalique, 2,5-acide dihydroxyisophtalique, 2,3-acide dihydroxyisophtalique, 2,3-acide dihydroxyphtalique, 2,4-acide dihydroxyphtalique, 3,4-acide dihydroxyphtalique, 3-acide fluorophtalique, 5-acide fluoroisophtalique, 2-acide fluorotéréphtalique, acide tétrafluorophtalique, acide tétrafluoroisophtalique, acide tétrafluorotéréphtalique, 1,4-acide naphtalène-dicarboxylique, 1,5-acide naphtalène-dicarboxylique, 2,6-acide naphtalène-dicarboxylique, 2,7 - acide naphtalène-dicarboxylique, 2,6- acide naphtalène-dicarboxylique, 2,7- acide naphtalène-dicarboxylique, acide diphénique, 1,8-acide dihydroxynaphtalène-3,6-dicarboxylique, acide diphényléther-4,4'-dicarboxylique, acide benzophénone-4,4'-dicarboxylique, acide diphénylsulfone-4,4'-dicarboxylique, acide biphényle-4,4'-dicarboxylique, 4-acide trifluorométhylphtalique, 2,2-Bis(4-carboxyphényle)hexafluoropropane, 4,4'-acide stilbendicarboxylique, 4-acide carboxycinnamique, ou leur ester alkyle C1-C20 ou ester alkyle C5-C12 ou leur anhydride d'acide ou leur chlorure d'acide.

14. Membrane selon les revendications 10, 11, 12 ou 13, **caractérisée en ce que** les composés qui se prêtent à la formation de polyazoles comprennent des acides tricarboxyliques, leur ester alkyle C1-C20 ou ester aryl C5-C12 ou leur anhydride d'acide ou leur halogénure d'acide ou acides tétracarboxyliques, leur ester alkyle C1-C20 ou ester aryl C5-C12 ou leurs anhydride d'acide ou leurs halogénures d'acide.

15. Membrane selon la revendication 14, **caractérisée en ce que** les acides tricarboxyliques aromatiques comprennent des composés sélectionnés parmi le groupe composé d'acide benzène-1,3,5-tricarboxylique (acide trimésique); acide benzène-2,4,5-tricarboxylique (acide trimellitique); (2-Carboxyphényle)acide iminodiacétique, acide biphényle-3,5,3'-tricarboxylique ; acide biphényle-3,5,4'-tricarboxylique, acide pyridine-2,4,6-tricarboxylique, acide benzène-1,2,4,5-tétracarboxylique ; acides naphtalène-1,4,5,8-tétracarboxylique, acides biphényle-3,5,3',5'-tétracarboxylique, acide benzophénone tétracarboxylique, acide biphényle-3,3',4,4'-tétracarboxylique, acide biphényle-2,2',3,3'-tétracarboxylique, acide naphtalène-1,2,5,6-tetracarboxylique ou acide naphtalène-1,4,5,8-tétracarboxylique.

16. Membrane selon les revendications 14 ou 15, **caractérisée en ce que** la teneur en acide tricarboxylique ou acides tétracarboxylique s'élève entre 0 et 30 % molaire, préférablement 0,1 et 20 % molaire, surtout 0,5 et 10 % molaire, par rapport à l'acide dicarboxylique ajouté.

17. Membrane selon une ou plusieurs des revendications 10 à 16, **caractérisée en ce que** les composés qui se prêtent à la formation de polyazoles comprennent des acides dicarboxyliques, acides tricarboxyliques ou acides tétracarboxyliques dont la combinaison aromatique contient au moins un atome d'azote, oxygène, souffre ou phosphore.

18. Membrane selon la revendication 17, **caractérisée en ce que** sont ajoutéé l'acide pyridine-2,5-dicarboxylique, acide pyridine-3,5-dicarboxylique, acide pyridine-2,6-dicarboxylique, acide pyridine-2,4-dicarboxylique, acide-4-phényle-2,5-pyridine dicarboxylique, acide pyrazole-3,5-dicarboxylique, acide pyrimidine-2,6-dicarboxylique, acide pyrazine-2,5-dicarboxylique, acide pyridine-2,4,6-tricarboxylique, benzimidazole-5,6-dicarboxylique, ainsi que leur ester alkyle C1-C20 ou ester alkyle C5-C12, ou leur anhydride d'acide ou leur chlorure d'acide.

19. Membrane selon les revendications 10 ou 11, **caractérisée en ce que** les composés qui se prêtent à la formation de polyazoles comprennent de l'acide diaminobenzoïque ou ses dérivés de mono ou dihydrochlorure.

20. Membrane selon une ou plusieurs des revendications précédentes, **caractérisé en ce que** le chauffage d'après l'étape B) est effectué après la formation d'une formation étendue d'après l'étape C).

21. Membrane selon la revendication 1, **caractérisée en ce que** le traitement selon l'étape D) est effectué en présence d'humidité et à des températures entre 0 °C et 150 °C.

22. Membrane selon une ou plusieurs des revendications précédentes, **caractérisée en ce que** le traitement de la membrane à l'étape D) dure entre 10 et 300 secondes.

23. Membrane selon une ou plusieurs des revendications précédentes, **caractérisée en ce que** la membrane formée d'après l'étape D) ou E) est réticulée grâce à l'effet de l'oxygène.

24. Membrane selon une ou plusieurs des revendications précédentes, **caractérisé en ce qu'**une couche d'une épaisseur de 20 et 4000 µm est obtenue à l'étape C).

25. Membrane selon une ou plusieurs des revendications précédentes, **caractérisée en ce que** la membrane formée d'après l'étape D) a une épaisseur d'entre 15 et 3000 µm.

26. Membrane selon une ou plusieurs des revendications précédentes, **caractérisée en ce que** la couche catalytique présente une épaisseur d'entre 0,1 et 50 µm.

27. Membrane selon une ou plusieurs des revendications précédentes, **caractérisée en ce que** la couche catalytique comprend des particules catalytiquement actives qui présente une taille d'entre 0,1 et 10 µm.

28. Membrane selon la revendication 27, **caractérisée en ce que** la substance catalytiquement active comprend du platine, palladium, or, rhodium, iridium ou ruthénium.

29. Membrane selon la revendication 1, **caractérisée en ce que** les particules catalytiquement actives contiennent du carbone.

30. Unité membrane-électrodes comprenant au moins une électrode et au moins une membrane selon une ou plusieurs des revendications 1 à 29.

31. Pile à combustible contenant une ou plusieurs unités membrane-électrodes selon la revendication 30.
